# EUROPÄISCHE PATENTSCHRIFT

(11) **EP 3 392 987 B1**
(45) Veröffentlichungstag und Bekanntmachung des Hinweises auf die Patenterteilung: **02.12.2020**
(21) Anmeldenummer: 17167566.3
(22) Anmeldetag: 21.04.2017
(51) Int. Cl.: H02B 3/00

(54) **VERFAHREN UND SYSTEM ZUR AUTOMATISIERTEN UNTERSTÜTZUNG EINES ANSCHLUSSVORGANGS, INSBESONDERE VON IN EINEM SCHALTSCHRANK ODER AN EINEM MONTAGESYSTEM ANGEORDNETEN KOMPONENTEN**
METHOD AND SYSTEM FOR AUTOMATED SUPPORT OF A CONNECTION PROCESS, IN PARTICULAR FOR COMPONENTS IN A SWITCH CABINET OR ON A MOUNTING SYSTEM
PROCÉDÉ ET SYSTÈME D'ASSISTANCE AUTOMATISÉE D'UN PROCESSUS DE RACCORDEMENT, EN PARTICULIER DE COMPOSANTS DISPOSÉS DANS UNE ARMOIRE ÉLECTRIQUE OU SUR UN SYSTÈME DE MONTAGE

(43) Veröffentlichungstag der Anmeldung: 24.10.2018
(73) Patentinhaber: Rittal GmbH & Co. KG, 35745 Herborn (DE)
(72) Erfinder: SCHALL, Jan Henry, 35457 Lollar (DE); WEICHSEL, Thomas, 41812 Erkelenz (DE)
(74) Vertreter: Angerhausen, Christoph

(56) Entgegenhaltungen:
- EP-A1- 3 142 128
- EP-A2- 2 575 147
- WO-A1-2016/202454
- DE-A1- 19 918 212
- US-B1- 6 272 387

## Beschreibung

Die Erfindung betrifft ein Verfahren mit den Merkmalen des Oberbegriffs des Anspruchs 1. Weiterhin betrifft die Erfindung ein System mit den Merkmalen des Oberbegriffs des Anspruchs 5, insbesondere zur Durchführung des zuvor beschriebenen Verfahrens. Die Erfindung betrifft zudem die Verwendung des Systems sowie ein Computerprogramm. Ein derartiges Verfahren und System ist aus der WO 2016/202454 A1 bekannt. Ein weiteres Verfahren zur Herstellung eines Kabelbaums ist aus der DE 199 18 212 A1 bekannt.

Schaltschränke dienen vor allem zur Versorgung von Anlagen oder Elektroinstallationen mit elektrischer Energie und zum Teil auch mit Signalen, zum Beispiel zur Steuerung einer Anlage oder elektrotechnischer Komponenten. Zu diesem Zweck sind in einem Schaltschrank typischerweise eine Vielzahl elektrischer, elektronischer und zum Teil auch pneumatischer oder hydraulischer Komponenten untergebracht. Darüber hinaus können in bzw. an einem Schaltschrank auch weitere elektrische und elektronische Komponenten verbaut sein, die zum Beispiel zur Klimatisierung, zur Beleuchtung oder zur Überwachung des Schaltschranks dienen.

Für eine ordnungsgemäße Funktionsweise müssen die im Schaltschrank untergebrachten Komponenten entsprechend eines vorgegebenen Anschlussplans, beispielsweise eines Verdrahtungsplans, eines Verschlauchungsplans, eines Verrohrungsplans oder einer Kombination daraus, über Verbindungsleitungen miteinander verbunden werden, wobei sich die Anforderungen an die einzelnen Verbindungsleitung je nach Art der Verbindung unterscheiden können, beispielsweise weil die Leitungen für unterschiedliche Stromstärken, Betriebsfrequenzen, Querschnitte oder für die Übermittlung von Daten ausgelegt sein müssen. Verdrahtungspläne dienen insbesondere zum Anschließen elektrotechnischer Komponenten; Verschlauchungs- und Verrohrungspläne dienen insbesondere zum Anschließen von pneumatischen bzw. hydraulischen Komponenten.

Die Bestückung eines Schaltschranks mit den entsprechenden Komponenten kann bereits werksseitig erfolgen oder auch direkt am Einsatzort. Das Anschließen, insbesondere die Verdrahtung der Komponenten kann ebenfalls werksseitig oder direkt am Einsatzort erfolgen und wird manuell von einem Techniker durchgeführt. Auch die Erweiterung oder Modifikation bestehender Schaltschränke erfordert eine manuelle Verdrahtung, Verschlauchung bzw. Verrohrung durch einen Techniker, insbesondere einen Elektrotechniker, wenn eine werksseitige, ggf. automatisierte Verdrahtung, Verschlauchung bzw. Verrohrung in solchen Fällen nicht möglich ist.

Bei der manuellen Verdrahtung/Verschlauchung/Verrohrung von Schaltschränken und Montagesystemen für Schaltschränke, wie zum Beispiel Montageplatten, gibt es verschiedene Verfahrensweisen.

Der die Verdrahtung/Verschlauchung/Verrohrung ausführende Techniker kann zum Beispiel anhand der Angaben in einem vorgegebenen Stromlaufplan und mit seinem Knowhow selbst die einzelnen vorzunehmenden Verbindungen ermitteln, die zugehörigen Anschlusspunkte im Schaltschrank lokalisieren, für die einzelnen Verbindungen geeignete Verbindungsleitungen, insbesondere mit geeigneten Querschnitten bzw. aus geeigneten Materialien, auswählen und damit die Verdrahtung/Verschlauchung/Verrohrung durchführen.

Alternativ kann der Techniker auch nach einer sogenannten Verdrahtungs-, Verschlauchungs- und/oder Verrohrungsliste vorgehen, in denen die vorzunehmenden Verdrahtungen/Verschlauchungen/Verrohrungen bereits vorgegeben und aufgelistet sind. Der Techniker kann die in der Verdrahtungs-, Verschlauchungs- und/oder Verrohrungsliste aufgeführten Verbindungen dann nacheinander abarbeiten, indem er mit seinem Knowhow die jeweiligen Anschlusspunkte der einzelnen Verdrahtungen manuell lokalisiert, Verlegewege festlegt, und dann die Verdrahtung/Verschlauchung/Verrohrung entsprechend durchführt.

Weiterhin gibt es verschiedene Verfahrensweisen zur Herstellung der zur Verdrahtung/Verschlauchung/Verrohrung erforderlichen Verbindungsleitungen:
So kann der Techniker mit seinem Knowhow die für die einzelnen Verbindungen jeweils erforderliche Verbindungsleitungsart selbst auswählen und vor Ort während des Anschlussvorgangs entsprechende Verbindungsleitungen selbst herstellen (konfektionieren). Für die Herstellung der Verbindungsleitungen kann er insbesondere die Verbindungsleitungen ablängen und endkonfektionieren, beispielsweise Aderendbehandlungen und/oder Beschriftungen aufbringen.

Alternativ können die Verbindungsleitungen auch automatisiert oder manuell vorab definiert und vorkonfektioniert werden, bevor der Techniker die Verdrahtung/Verrohrung/Verschlauchung vornimmt. Zu diesem Zweck kann beispielsweise während der Arbeitsvorbereitung vor dem eigentlichen Verdrahten/Verrohren/Verschlauchen ein sogenanntes virtuelles Routing durchgeführt werden, bei dem die Verdrahtung/Verschlauchung/Verrohrung des Schaltschranks, vorzugsweise softwaregestützt, bereits im Detail vorgeplant wird, so dass jede Verbindungsleitung mit Länge, Art der Verbindung, Art der Konfektionierung und ggf. Art der Beschriftung vorab definiert wird. Insbesondere können bei einem solchen virtuellen Routing auch bereits die Verlegewege vorab fix definiert und ggf. in einem Datenformat (wie zum Beispiel in einem CAx-Format) hinterlegt werden.

Durch die Vorkonfektionierung der Verbindungsleitung und Vorabdefinition der Verlegewege wird die Verdrahtung/Verschlauchung/Verrohrung eines Schaltschranks bereits deutlich vereinfacht, da der Techniker die Verbindungsleitungsart nicht selbst auswählen, die Verbindungsleitungen nicht selbst konfektionieren und vorzugsweise auch die Verlegewege nicht selbst bestimmen muss.

Aufgrund der Komplexität heutiger Schaltschränke und der Vielzahl innerhalb der Schaltschränke vorzunehmender Verbindungen besteht jedoch auch bei vorkonfektionierten Verbindungsleitungen für den Techniker das Problem, die einzelnen vorkonfektionierten Verbindungsleitungen korrekt zu identifizieren, die zu verbindenden Komponenten zu lokalisieren, die für die Verbindungsleitungen vorgesehenen Anschlusspunkte auf den Komponenten zu identifizieren, den jeweiligen Verlegeweg zu bestimmen und die Verbindungsleitung dann wie vorgesehen auch real zu verlegen und anzuschließen. Gerade bei komplexen Schaltschränken mit vielen Komponenten und Verbindungen kommt es immer wieder zu Verwechslungen, so dass der Techniker die Verlegung nicht ordnungsgemäß fertigstellen kann oder falsche Verbindungen durchgeführt werden, die zu einer fehlerhaften Funktion oder sogar zu einer Beschädigung von Komponenten im Betrieb führen können.

Vor diesem Hintergrund liegt der vorliegenden Erfindung die Aufgabe zugrunde, ein Verfahren und ein System zur Verfügung zu stellen, mit dem insbesondere ein solcher Verdrahtungsvorgang effektiv unterstützt werden kann, so dass die Verdrahtung für den Techniker erleichtert wird, Fehlverdrahtungen vermieden werden und der Verdrahtungsprozess insgesamt bei erhöhter Qualität beschleunigt wird.

Diese Aufgabe wird erfindungsgemäß gelöst durch ein Verfahren, dadurch gekennzeichnet, dass das Erzeugen der visuellen Nutzerausgabe das Erzeugen einer grafischen Darstellung der Anschlusspunkte und des Verlegewegs der Verbindungsleitung aufweist

Die oben genannte Aufgabe wird weiterhin erfindungsgemäß gelöst durch ein System, dadurch gekennzeichnet, dass die visuelle Nutzerausgabe (20, 70) eine grafische Darstellung der Anschlusspunkte und des Verlegewegs der Verbindungsleitung (12, 38, 38', 52) aufweist

Das zuvor beschriebene Verfahren wird vorzugsweise unter Verwendung eines solchen Systems durchgeführt. Entsprechend wird ein solches System vorzugsweise zur Durchführung des zuvor beschriebenen Verfahrens verwendet.

Das zuvor beschriebene Verfahren und das zuvor beschriebene System dienen jeweils zur automatisierten Unterstützung eines Anschlussvorgangs. Unter einem Anschlussvorgang bzw. dem Anschließen von in einem Schaltschrank bzw. an einem Montagesystem angeordneten Komponenten wird vorliegend das Anschließen von Verbindungsleitungen an bzw. zwischen den Komponenten verstanden, die in einem Schaltschrank bzw. an einem Montagesystem, beispielsweise einer Montageplatte, angeordnet sind. Das Montagesystem kann in einem Schaltschrank angeordnet oder für einen solchen bestimmt sein. Alternativ kann es sich auch um ein unabhängiges Montagesystem handeln, dass auch ohne Schaltschrank verwendet werden kann, beispielsweise direkt an einer Maschine.

Bei dem Anschlussvorgang kann es sich insbesondere um einen Verdrahtungsvorgang handeln, bei dem Verbindungsleitungen für die Verdrahtung wie zum Beispiel Einzeldrähte oder Kabel angeschlossen werden. Es ist aber auch denkbar, dass Verbindungsleitungen für pneumatische oder hydraulische Komponenten, zum Beispiel Schläuche, oder Rohre angeschlossen werden. Beim Anschluss von Schläuchen kann entsprechend von einem Verschlauchungsvorgang und beim Anschluss von Rohren von einem Verrohrungsvorgang gesprochen werden. Grundsätzlich umfasst der Begriff Anschlussvorgang damit Verdrahtungsvorgänge, Verschlauchungsvorgänge, Verrohrungsvorgänge und auch Kombinationen daraus. Der Anschlussvorgang selbst wird zwar manuell von einem Techniker durchgeführt; durch das zuvor beschriebene Verfahren bzw. System wird er hierbei jedoch automatisiert unterstützt. Insbesondere helfen ihm das Verfahren und das System dabei, die vorkonfektionierten Verbindungsleitungen eindeutig zuzuordnen, die zugehörigen Anschlusspunkte zu identifizieren und vorzugsweise auch einen vorgegebenen Verlegeweg einzuhalten, indem das Verfahren und das System dem Techniker die hierzu erforderlichen Informationen gezielt für die von ihm jeweils ausgewählte nächste Verbindungsleitung zur Verfügung stellt.

Der Anschlussvorgang, insbesondere Verdrahtungsvorgang, erfolgt insbesondere ; in einem Schaltschrank oder an einer Montageplatte angeordneten Komponenten. Unter einem Schaltschrank wird vorliegend eine Einrichtung zur Unterbringung von elektrotechnischen, hydraulischen und/oder pneumatischen Komponenten verstanden. Der Schaltschrank bildet eine Einhausung zum Schutz der Komponenten, insbesondere vor äußeren Einflüssen und ggf. Einblicken, aufweist. Eine solche Einhausung ermöglicht zudem vorzugsweise eine gezielte Wärmeabfuhr von den darin installierten Komponenten. Zur Montage dieser Komponenten werden in der Regel Montagesysteme genutzt die als Montageplatten oder Montagerahmen bezeichnet werden und die in den Schaltschrank eingebaut werden. Auf diesen Montagesystemen werden die Komponenten mechanisch befestigt. Weiterhin können Montagesysteme auch unabhängig von einem Schaltschrank verwendet werden.

Der Schaltschrank weist vorzugsweise eine Schranktür auf, durch die das Innere des Gehäuses zugänglich ist, so dass die Montage und der Anschluss der Komponenten erfolgen können.

Bei den Komponenten handelt es sich insbesondere um Komponenten der Steuerungstechnik. Speziell kann es sich bei dem Schaltschrank um einen Schaltschrank für elektrotechnische Komponenten und ggf. zusätzlich hydraulische und/oder pneumatische Komponenten handeln. Der Schaltschrank kann jedoch auch ausschließlich für hydraulische und/oder pneumatische Komponenten vorgesehen sein.

Unter einem Montagesystem werden Systeme verstanden, die dazu dienen, um Komponenten in einem Schaltschrank oder auch unabhängig davon zu installieren. Bei dem Montagesystem kann es sich beispielsweise um einen Montagerahmen oder um eine Montageplatte handeln. Unter einer Montageplatte wird eine Platte verstanden, die zur Anordnung und mechanischen Befestigung innerhalb eines Schaltschranks dient. Die auf einer Montageplatte angeordneten Komponenten werden anschließend über geeignete elektrotechnische, pneumatische oder hydraulische Verbindungen miteinander verbunden. Zum Zweck der Montage weist die Montageplatte vorzugsweise Montagemittel wie zum Beispiel Bohrungen oder Schienen auf, an denen die elektrischen und elektronischen Komponenten montiert werden können. Insbesondere kann eine solche Montageplatte einen Teil eines Schaltschranks bilden.

Bei dem Verfahren wird mittels einer Erfassungseinrichtung eine Kennung einer Verbindungsleitung erfasst. Die Erfassung der Kennung erfolgt vorzugsweise optisch, beispielsweise mittels einer Kamera oder mittels eines Scanners, zum Beispiel eines Laserscanners. Entsprechend weist die Erfassungseinrichtung des Systems vorzugsweise eine Kamera oder einen Scanner, beispielsweise einen Laserscanner, auf. Die Kennung kann zum Beispiel einfach auf eine Verbindungsleitung aufgedruckt werden, wodurch die Herstellung der Kennung sehr einfach und kostengünstig bewirkt werden kann.

Unter einer Kennung einer Verbindungsleitung wird eine Kennung verstanden, die einer bestimmten Verbindungsleitung zugeordnet ist. Die Kennung ist vorzugsweise direkt an der Verbindungsleitung angebracht, beispielsweise auf diese aufgedruckt. Bei der Kennung kann es sich beispielsweise um einen Barcode oder QR-Code handeln. Alternativ kann die Kennung auch eine Zeichenfolge sein, zum Beispiel aus Zahlen, Buchstaben und/oder anderen Symbolen, die von der Erfassungseinrichtung erfasst und zum Beispiel durch ein an sich bekanntes Bildanalyseverfahren erkannt werden kann. Beispielsweise kann die Kennung ein numerischer oder alphanumerischer Code, ggf. auch mit Sonderzeichen, sein.

Die Kennung identifiziert die Verbindungsleitung. Das bedeutet, dass sich die Verbindungsleitung anhand der Kennung von anderen Verbindungsleitungen unterscheiden lässt. Vorzugsweise ist die Kennung so gewählt, dass sie die Verbindungsleitung innerhalb einer Menge von mehreren Verbindungsleitungen zum Anschließen, insbesondere zur Verdrahtung, von in einem Schaltschrank bzw. an einem Montagesystem, z.B. einer Montageplatte, angeordneter Komponenten eindeutig identifiziert. Sind zum Anschließen, insbesondere zur Verdrahtung, von in einem Schaltschrank bzw. an einem Montagesystem, z.B. einer Montageplatte, angeordneten Komponenten eine Menge Verbindungsleitungen vorgesehen, so unterscheiden sich also die Kennungen der einzelnen Verbindungsleitungen vorzugsweise voneinander, so dass sich jede einzelne Verbindungsleitung anhand ihrer Kennung eindeutig identifizieren lässt. Umfasst die Menge an Verbindungsleitungen zum Anschließen, insbesondere zur Verdrahtung von in einem Schaltschrank bzw. an einem Montagesystem, z.B. einer Montageplatte, angeordneter Komponenten mehrere Verbindungsleitungen gleicher Art und Länge, so können diese in einer Ausführungsform auch gleiche bzw. in Teilen gleiche Kennungen aufweisen.

Bei dem Verfahren wird abhängig von der erfassten Kennung und einem Anschlussplan eine visuelle Nutzerausgabe über das Anschließen der durch die Kennung identifizierten Verbindungsleitung erzeugt. Entsprechend ist die Visualisierungseinrichtung des Systems dazu eingerichtet, abhängig von der erfassten Kennung und einem Anschlussplan eine visuelle Nutzerausgabe über das Anschließen der durch die Kennung identifizierten Verbindungsleitung zu erzeugen. Bei dem Anschlussplan kann es sich beispielsweise um einen Verdrahtungsplan handeln und die Visualisierungseinrichtung kann entsprechend dazu eingerichtet sein, abhängig von der erfassten Kennung dem Verdrahtungsplan eine visuelle Nutzerausgabe über die Verdrahtung der durch die Kennung identifizierten Verbindungsleitung zu erzeugen.

Unter einer Nutzerausgabe über das Anschließen und die Verdrahtung, der durch die Kennung identifizierten Verbindungsleitung wird eine Nutzerausgabe verstanden, die Anweisungen zum Anschließen und zur Verdrahtung, der identifizierten Verbindungsleitung erhält. Die Anweisungen zum Anschließen und zur Verdrahtung, sind in grafischer Form, wobei die Nutzerausgabe eine grafische Darstellung der Anschlusspunkte der Verbindungsleitung und des Verlegewegs der Verbindungsleitung enthalt.

Zur Erzeugung der Nutzerausgabe wird vorzugsweise eine Visualisierungssoftware eingesetzt, die zum Beispiel auf einem Speicher des Systems gespeichert sein und auf mindestens einem Prozessor der Visualisierungseinrichtung ausgeführt werden kann. Auf einem Speicher des Systems kann insbesondere auch ein virtuelles Modell des Schaltschranks mit den darin angeordneten, anzuschließenden Komponenten bzw. des Montagesystems mit den daran angeordneten, anzuschließenden Komponenten gespeichert sein, auf dessen Grundlage die Visualisierungssoftware die visuelle Nutzerausgabe erzeugt.

Die Nutzerausgabe über das Anschließen, insbesondere über die Verdrahtung, wird abhängig von der erfassten Kennung erzeugt. Auf diese Weise kann die Nutzerausgabe gezielt an die durch die Kennung identifizierte Verbindungsleitung angepasst werden, so dass der Nutzer gezielt die Anweisungen zum Anschließen, insbesondere zur Verdrahtung, der von ihm ausgewählten Verbindungsleitung erhält.

Die Nutzerausgabe wird weiterhin abhängig von einem Anschlussplan erzeugt. Unter einem Anschlussplan wird ein Plan verstanden, der den einzelnen Verbindungsleitungen Informationen für deren Anschluss zuordnet, insbesondere die Anschlusspunkte der jeweiligen Verbindungsleitung und den Verlegeweg der jeweiligen Verbindungsleitung. Der Anschlussplan kann beispielsweise auf einem Speicher des Systems gespeichert sein, so dass er von der Visualisierungseinrichtung abgerufen werden kann. Bei dem Anschlussplan kann es sich insbesondere um einen Verdrahtungsplan handeln, der den einzelnen Verbindungsleitungen Informationen für deren Verdrahtung zuordnet. Weiterhin kann es sich bei dem Anschlussplan auch um einen Verschlauchungsplan und/oder einen Verrohrungsplan handeln, der den einzelnen Verbindungsleitungen Informationen für deren Verbindung, insbesondere durch Schläuche und/oder Rohre, zuordnet. Der Anschlussplan kann auch eine Kombination aus einem Verdrahtungsplan, einem Verschlauchungsplan und/oder einem Verrohrungsplan sein.

Der Anschlussplan, insbesondere Verdrahtungsplan, kann zum Beispiel in Form eines virtuellen Modells, insbesondere eines zwei- oder dreidimensionalen Modells, des Schaltschranks bzw. der Montageplatte abgespeichert sein, das einerseits Informationen über den Schaltschrank (bzw. über die Montageplatte) und die darin (bzw. daran) angeordneten Komponenten und andererseits Informationen über die vorkonfektionierten Verbindungsleitungen zur Verbindung der einzelnen Komponenten umfasst, insbesondere die jeweiligen Anschlusspunkte und den jeweiligen Verlegeweg der Verbindungsleitungen.

Die Nutzerausgabe wird über eine Ausgabeeinrichtung ausgegeben. Bei der Ausgabeeinrichtung handelt es sich vorzugsweise um einen Bildschirm, einen Projektor, eine Datenbrille oder auch um eine Kombination aus einem Bildschirm, einem Projektor und/oder einer Datenbrille. Bei der Ausgabeeinrichtung kann es sich insbesondere auch um einen Bildschirm eines mobilen Geräts, wie zum Beispiel eines 1Smartphones oder Tablet-Computers, handeln.

Mit dem beschriebenen Verfahren und dem beschriebenen System kann ein Techniker nach Auswahl einer Verbindungsleitung deren Kennung automatisiert erfassen lassen und dann anhand der über die Ausgabeeinrichtung ausgegebenen Nutzerausgabe die Installation der betreffenden Verbindungsleitung durchführen.

Beschrieben wird weiterhin eine nicht zur Erfindung gehörende Erfassungseinheit zum Erfassen einer Kennung einer Verbindungsleitung mit einem Erfassungsbereich, in dem eine zu identifizierende Verbindungsleitung positionierbar ist, mit einem Kameramodul, das dazu eingerichtet ist, Bilddaten von einer in dem Erfassungsbereich positionierten Verbindungsleitung zu erfassen, mit einer Steuereinrichtung, die dazu eingerichtet ist, in den erfassten Bilddaten eine Kennung einer Verbindungsleitung aufzufinden und einen digitalen Code für die aufgefundene Kennung zu erzeugen, und mit einer Übermittlungseinrichtung, die dazu eingerichtet ist, den digitalen Code für die aufgefundene Kennung an eine Visualisierungseinrichtung zur Erzeugung einer Nutzerausgabe über das Anschließen, insbesondere über die Verdrahtung, der durch die Kennung identifizierten Verbindungsleitung zu übertragen.

Der Erfassungsbereich umfasst vorzugsweise eine Aufnahme, in die eine zu identifizierende Verbindungsleitung eingelegt werden kann. In diesem Fall ist das Kameramodul vorzugsweise dazu eingerichtet, Bilddaten von einer in die Aufnahme eingelegten Verbindungsleitung zu erfassen. Die Aufnahme ist vorzugsweise so ausgestaltet, dass sie einen Abschnitt der Verbindungsleitung zumindest teilweise umgibt. Beispielsweise kann die Aufnahme in Form eines Kanals ausgebildet sein, in den die Verbindungsleitung einlegbar oder einschiebbar ist. Der Kanal kann beispielsweise ein- oder beidseitig geöffnet sein. Die Aufnahmevorrichtung ist vorzugsweise so dimensioniert, dass sie das Erfassen einer Kennung an verschiedenen Positionen auf der Verbindungsleitung ermöglicht, zum Beispiel am Drahtende, fortlaufend entlang des Drahts oder an einer bestimmten Stelle der Verbindungsleitung, zum Beispiel mit einem bestimmten Abstand zum Drahtende.

Die Erfassungseinheit weist weiterhin ein Kameramodul auf, das dazu eingerichtet ist, Bilddaten von einer im Erfassungsbereich positionierten Verbindungsleitung, insbesondere einer in die vorzugsweise vorgesehene Aufnahme eingelegten Verbindungsleitung zu erfassen. Zu diesem Zweck ist das Kameramodul insbesondere im Bereich der Aufnahme angeordnet. Ist die Aufnahme beispielsweise in Form eines Kanals ausgebildet, so ist das Kameramodul vorzugsweise innerhalb des Kanals bzw. an der Kanalwandung angeordnet. Vorzugsweise weist die Aufnahme eine Ausprägung wie zum Beispiel eine Kante auf, die im Sichtfeld des Kameramoduls angeordnet ist. Auf diese Weise wird die Positionierung der Verbindungsleitung in der Aufnahme erleichtert, um die Kennung im Sichtfeld des Kameramoduls zu positionieren.

Weiterhin weist die Erfassungseinheit vorzugsweise einen Bildschirm auf, auf dem die vom Kameramodul erfassten Bilddaten ausgegeben werden. Dies erleichtert die Positionierung der Verbindungsleitung in der Aufnahme, so dass die Kennung vom Kameramodul erfasst werden kann.

Um die Erfassung der Bilddaten möglichst unabhängig von sich verändernden Umgebungsbedingungen wie zum Beispiel der Lichtverhältnisse am Ort der Erfassungseinheit durchführen und die Kennung einer Verbindungsleitung sicher erkennen zu können, weist die Erfassungseinheit vorzugsweise eine Beleuchtungseinrichtung auf, die das Sichtfeld des Kameramoduls ausleuchtet. Ist die Aufnahme in Form eines Kanals ausgebildet, so ist die Beleuchtungseinrichtung vorzugsweise innerhalb des Kanals bzw. an der Kanalwandung angeordnet.

Die Beleuchtungseinrichtung ist vorzugsweise derart ausgebildet und angeordnet, um eine gekrümmte Oberfläche auf einer Verbindungsleitung wie einem Kabel, einem Rohr oder einem Schlauch gleichmäßig auszuleuchten. Auf diese Weise kann eine auf die Verbindungsleitung gedruckte Kennung zuverlässig erfasst werden. Vorzugsweise ist die Beleuchtungseinrichtung derart ausgebildet und angeordnet, dass eine Verbindungsleitung quer zu ihrer Erstreckungsrichtung über einen Winkelbereich von mindestens 180°, vorzugsweise mindestens 270° gleichmäßig ausgeleuchtet werden kann. Insbesondere kann die Beleuchtungseinrichtung die vorzugsweise vorgesehene Aufnahme zumindest teilweise umgeben oder an mehreren Seiten der Aufnahme angeordnet sein.

Die Erfassungseinheit weist weiterhin eine Steuereinrichtung auf, die dazu eingerichtet ist, in den erfassten Bilddaten eine Kennung einer Verbindungsleitung aufzufinden. Zu diesem Zweck kann die Steuereinrichtung insbesondere mindestens einen Prozessor und einen Speicher mit einem Programm zur Analyse von Bilddaten aufweisen, dessen Ausführung auf dem mindestens einen Prozessor eine Bildanalyse der von dem Kameramodul erfassten Bilddaten veranlasst, um in den Bilddaten eine Kennung einer Verbindungsleitung, beispielsweise eine Zeichenfolge wie einen numerischen Code oder einen Barcode bzw. QR-Code, aufzufinden.

Die Steuereinrichtung ist weiterhin dazu eingerichtet, einen digitalen Code für die aufgefundene Kennung zu erzeugen. Enthalten die Bilddaten beispielsweise ein Bild einer Kennung in Form einer Zeichenfolge (z.B. Bilddaten der Zeichenfolge "A38BX") oder eines Bar- bzw. QR-Codes, so ist die Steuereinrichtung vorzugsweise dazu eingerichtet, eine digitale Repräsentation der Zeichenfolge (im Beispiel die digitale Zeichenfolge (String) "A38BX") oder der im Bar- bzw. QR-Code kodierten Nachricht zu erzeugen. Durch diese Umwandlung der Bilddaten in einen digitalen Code kann dieser digital weiterverarbeitet werden.

Die Erfassungseinheit weist weiterhin eine Übermittlungseinrichtung auf, die dazu eingerichtet ist, den digitalen Code für die aufgefundene Kennung an eine Visualisierungseinrichtung zur Erzeugung einer Nutzerausgabe über das Anschließen, insbesondere über die Verdrahtung, der durch die Kennung identifizierten Verbindungsleitung zu übertragen. Die Übermittlungseinrichtung kann beispielsweise eine Sendeeinrichtung umfassen, über die der digitale Code zum Beispiel über eine standardisierte Schnittstelle, wie eine Netzwerkschnittstelle, mit einem digitalen Übertragungsprotokoll an einen Server übermittelt werden kann, auf dem eine Visualisierungssoftware zur Erzeugung einer Nutzerausgabe über das Anschließen, insbesondere über die Verdrahtung, der durch die Kennung identifizierten Verbindungsleitung läuft.

In einer Ausführungsform ist in die Erfassungseinheit eine Visualisierungseinheit integriert, die dazu eingerichtet ist, eine Nutzerausgabe über das Anschließen, insbesondere die Verdrahtung, der durch die Kennung identifizierten Verbindungsleitung zu erzeugen. Auf diese Weise kann die Nutzerausgabe direkt in der Erfassungseinheit erzeugt und vorzugsweise auf einer Nutzerausgabeeinrichtung der Erfassungseinheit oder auf einer über eine Kommunikationsverbindung mit der Erfassungseinheit verbundenen Ausgabeeinheit, wie zum Beispiel einer Datenbrille o.ä. angezeigt werden. Die Übermittlung des digitalen Codes kann in diesem Fall insbesondere rein softwareseitig erfolgen, indem zum Beispiel eine Variable mit dem digitalen Code für die Kennung an ein Visualisierungsmodul übergeben wird.

Die Erfassungseinheit kann als stationäre oder mobile Einheit ausgebildet sein. Vorzugsweise umfasst die Erfassungseinheit eine Einhausung, die die einzelnen Komponenten der Erfassungseinheit vor Einflüssen aus der Umgebung wie zum Beispiel Staub, Nässe, Feuchtigkeit udgl. schützt. Die vorzugsweise vorgesehene Aufnahme kann insbesondere durch die Einhausung gebildet werden, wobei in die Einhausung dann vorzugsweise eine Beleuchtungseinrichtung integriert ist, um eine gekrümmte Oberfläche einer in der Aufnahme positionierten Verbindungsleitung gleichmäßig auszuleuchten.

Die oben genannte Aufgabe wird erfindungsgemäß weiterhin gelöst durch die Verwendung des zuvor beschriebenen Systems zur automatisierten Unterstützung eines Anschlussvorgangs, insbesondere eines Verdrahtungsvorgangs von in einem Schaltschrank oder an einem Montagesystem, wie zum Beispiel einer Montageplatte, angeordneten Komponenten.

Die oben genannte Aufgabe wird weiterhin gelöst durch ein Computerprogramm umfassend Befehle, die bei der Ausführung des Programms durch einen Computer diesen veranlassen, das zuvor beschriebene Verfahrens auszuführen. Ein solches Computerprogramm kann beispielsweise auf einem Speicher des System oder der Erfassungseinheit gespeichert werden, so dass es auf der jeweiligen Steuereinrichtung ausführbar ist.

Im Folgenden werden verschiedene Ausführungsformen des Verfahrens, des Systems, des Computerprogramms und der Verwendung beschrieben, wobei die einzelnen Ausführungsformen jeweils einzeln für das Verfahren, das System, das Computerprogramm und die Verwendung gelten und wobei die einzelnen Ausführungsformen zudem miteinander kombiniert werden können.

Dadurch dass dem Techniker zum Anschließen, insbesondere zur Verdrahtung, von in einem Schaltschranks bzw. an einem Montagesystem, z.B. einer Montageplatte, angeordneten Komponenten eine Menge vorkonfektionierter Verbindungsleitungen zur Verfügung steht, wird das Anschließen, insbesondere die Verdrahtung, der in dem Schaltschrank bzw. an der Montageplatte angeordneten Komponenten deutlich vereinfacht, da der Techniker nicht selbst Art und Länge der einzelnen Verbindungsleitungen bestimmen und herstellen muss. Durch das hier beschriebene Verfahren und System wird zudem das bisherige Problem aus dem Stand der Technik überwunden, dass bei einer großen Menge vorkonfektionierter Verbindungsleitungen zum Anschließen, insbesondere zur Verdrahtung von in einem Schaltschrank bzw. an einem Montagesystem, z.B. einer Montageplatte, angeordneten Komponenten der Techniker nur schwierig die einzelnen Verbindungsleitungen auseinanderhalten kann. Indem das Verfahren und das System dazu eingerichtet sind, das Anschließen, insbesondere die Verdrahtung, von in einem Schaltschrank bzw. an einem Montagesystem, z.B. einer Montageplatte, angeordneten Komponenten mit vorkonfektionierten Verbindungsleitungen zu unterstützen, indem sie dem Techniker die zum Anschließen, insbesondere zur Verdrahtung, der einzelnen Verbindungsleitungen erforderlichen Informationen auf Abruf gezielt zur Verfügung stellen, kann der Techniker das Anschließen, insbesondere die Verdrahtung, der in dem Schaltschrank bzw. an der Montageplatte angeordneten Komponenten viel einfacher durchführen.

Die Visualisierungseinrichtung ist vorzugsweise dazu eingerichtet, visuelle Nutzerausgaben über das Anschließen, insbesondere die Verdrahtung der einzelnen Verbindungsleitungen der Menge vorkonfektionierter Verbindungsleitungen zu erzeugen. Zu diesem Zweck umfasst der Anschlussplan, insbesondere der Verdrahtungsplan, vorzugsweise Informationen über das Anschließen, insbesondere über die Verdrahtung der einzelnen Verbindungsleitungen aus der Menge von Verbindungsleitungen, insbesondere über die jeweiligen Anschlusspunkte und den jeweiligen Verlegeweg.

Bei einer weiteren Ausführungsform wird die Nutzerausgabe mittels eines virtuellen Modells des Schaltschranks bzw. des Montagesystems mit einer Darstellung des Anschlusses, insbesondere der Verdrahtung, der identifizierten Verbindungsleitung erzeugt. Bei einer entsprechenden Ausführungsform des Systems ist die Visualisierungseinrichtung dazu eingerichtet, mittels eines virtuellen Modells des Schaltschranks bzw. des Montagesystems die Nutzerausgabe mit einer Darstellung des Anschlusses, insbesondere der Verdrahtung der identifizierten Verbindungsleitung zu erzeugen. Auf diese Weise kann der das Anschließen, insbesondere die Verdrahtung, durchführende Techniker der Nutzerausgabe Anweisungen zum Anschließen, insbesondere zur Verdrahtung der identifizierten Verbindungsleitung in intuitiver und grafischer Weise entnehmen, so dass das Anschließen, insbesondere die Verdrahtung, vereinfacht wird. Beispielsweise kann die Nutzerausgabe eine Darstellung des Schaltschranks bzw. des Montagesystems und der daran angeordneten Komponenten mit einer Darstellung der identifizierten Verbindungsleitung in der fertig angeschlossenen, insbesondere verdrahteten, Position zeigen. Der Anschlussplan, insbesondere Verdrahtungsplan, kann zumindest teilweise durch das virtuelle Modell des Schaltschranks bzw. des Montagesystems gebildet werden. Zusätzlich kann der Anschlussplan, insbesondere Verdrahtungsplan, beispielsweise eine Zuordnungsliste umfassen, in der den Kennungen zur Identifizierung der einzelnen Verbindungsleitungen ein virtuelles Modell der jeweiligen Verbindungsleitung zugeordnet ist.

Bei einer weiteren Ausführungsform wird die Nutzerausgabe über ein Augmented-Reality-Gerät ausgegeben, wobei ein reales Bild oder ein realer Gegenstand mit der erzeugten Nutzerausgabe überlagert wird. Bei einer entsprechenden Ausführung umfasst das System ein Augmented-Reality-Gerät, das zur Ausgabe der Nutzerausgabe an den Nutzer eingerichtet ist, wobei ein reales Bild oder ein realer Gegenstand mit der erzeugten Nutzerausgabe überlagert wird. Das Augmented-Realiy-Gerät bildet also insbesondere die Ausgabeeinrichtung des Systems.

Unter einem Augmented-Reality-Gerät wird ein Gerät verstanden, das dazu eingerichtet ist, die Realitätswahrnehmung eines Nutzers computergestützt zu erweitern. Zu diesem Zweck kann das Augmented-Reality-Gerät insbesondere ein reales Bild, beispielsweise ein durch eine Kamera aufgenommenes Bild, anzeigen und mit zusätzlichen Informationen, beispielsweise in Text- und/oder Bildform, überlagern. Die Überlagerung des realen Bilds mit den zusätzlichen Informationen kann durch die Visualisierungseinrichtung durchgeführt werden. Alternativ kann das Augmented-Reality-Gerät Informationen, zum Beispiel in Text- und/oder Bildform, in das Sichtfeld des Nutzers projizieren, zum Beispiel auf einen zumindest teilweise transparenten Schirm wie bei einem Head-up-Display oder direkt auf die Netzhaut des Nutzers wie bei einigen Datenbrillen.

Weiterhin kann das Augmented-Reality-Gerät auch dazu eingerichtet sein, einen realen Gegenstand, insbesondere den Schaltschrank oder das Montagesystem und/oder die darin bzw. daran angeordneten Komponenten, mit der Nutzerausgabe zu überlagern. Zu diesem Zweck kann das Augmented-Reality-Gerät beispielsweise eine Projektionseinheit aufweisen, die dazu eingerichtet ist, die Nutzerausgabe direkt auf den realen Gegenstand, beispielsweise den Schaltschrank bzw. das Montagesystem und/oder die darin bzw. daran angeordneten Komponenten zu projizieren. Vorzugsweise wird die Nutzerausgabe derart auf den Schaltschrank bzw. das Montagesystem und/oder die darin bzw. daran angeordneten Komponenten projiziert, dass die Anschlusspunkte und der Verlegeweg für die identifizierte Verbindungsleitung direkt auf dem realen Schaltschrank bzw. dem realen Montagesystem und/oder die darin bzw. daran angeordneten Komponenten angezeigt werden.

Vorzugsweise handelt es sich bei dem Augmented-Reality-Gerät um eine Datenbrille. Diese kann beispielsweise einen oder zwei Bildschirme zur Anzeige der erzeugten Nutzerausgabe und des realen Bildsaufweisen oder eine Projektionseinheit zur Anzeige der Nutzerausgabe durch Projektion auf die Netzhaut des Trägers. Durch das Tragen einer Datenbrille behält der Techniker die Hände frei für das Anschließen, insbesondere die Verdrahtung des Schaltschranks bzw. der Montageplatte.

Alternativ kann es sich bei dem Augmented-Reality-Gerät auch um ein Smartphone oder um einen Tablet-PC handeln. Smartphones und Tablet-PCs verfügen neben einem Bildschirm in der Regel auch über eine Kamera, mit denen einerseits die Erfassung einer Kennung einer Verbindungsleitung und andererseits die Aufnahme eines realen Bilds vom Schaltschrank bzw. der Montageplatte möglich sind. Weiterhin verfügen heutige Smartphones und Tablet-PCs über genügend Rechenleistung, um für die anhand der erfassten Kennung identifizierte Verbindungsleitung eine visuelle Nutzerausgabe über das Anschließen, insbesondere die Verdrahtung, der Verbindungsleitung zu erzeugen. Alternativ kann die Erzeugung der Nutzerausgabe aber auch auf einem Server erfolgen, mit dem das Augmented-Reality-Gerät über eine Kommunikationsverbindung wie zum Beispiel eine Netzwerkverbindung, kommuniziert.

Bei einer besonders bevorzugten Ausführungsform des Verfahrens wird ein reales Bild des Schaltschranks bzw. des Montagesystems und/oder der darin bzw. daran angeordneten Komponenten erfasst und mit einem virtuellen Bild des Schaltschranks bzw. des Montagesystems und/oder der darin bzw. daran angeordneten Komponenten und/oder mit einem virtuellen Bild der identifizierten Verbindungsleitung überlagert. Bei einer entsprechenden Ausführungsform des Systems ist die Visualisierungseinrichtung dazu eingerichtet, ein reales Bild des Schaltschranks bzw. des Montagesystems und/oder der darin bzw. daran angeordneten Komponenten mit einem virtuellen Bild des Schaltschranks bzw. des Montagesystems und/oder der darin bzw. daran angeordneten Komponenten und/oder mit einem virtuellen Bild der identifizierten Verbindungsleitung zu überlagern. Insbesondere weist das System eine Erfassungseinrichtung zur Erfassung eines Bilds des Schaltschranks bzw. des Montagesystems und/oder der darin bzw. daran angeordneten Komponenten auf. Beispielsweise kann zur Erfassung eines realen Bilds des Schaltschranks bzw. des Montagesystems und/oder der darin bzw. daran angeordneten Komponenten die zur Erfassung der Kennung vorgesehene Erfassungseinrichtung verwendet werden.

Die Überlagerung des realen Bilds mit der Nutzerausgabe erfolgt insbesondere derart, dass eine Darstellung der identifizierten Verbindungsleitung im realen Bild des Schaltschranks bzw. des Montagesystems und/oder der darin bzw. daran angeordneten Komponenten angezeigt wird, und zwar vorzugsweise an der zu verlegenden Position. Auf diese Weise kann der Nutzer intuitiv sofort erkennen, wie die identifizierte Verbindungsleitung anzuschließen und zu verlegen ist.

Bei einer weiteren Ausführungsform des Verfahrens wird eine Nutzereingabe über das erfolgte Anschließen, insbesondere über die erfolgte Verdrahtung einer anderen, zu einem früheren Zeitpunkt identifizierten Verbindungsleitung empfangen und die Nutzerausgabe über das Anschließen, insbesondere die Verdrahtung der identifizierten Verbindungsleitung wird vorzugsweise abhängig von der Nutzereingabe über das erfolgten Anschließen, insbesondere die erfolgte Verdrahtung der anderen Verbindungsleitung erzeugt. Bei einer entsprechenden Ausführungsform umfasst das System eine Eingabeeinrichtung, die dazu eingerichtet ist, Nutzereingaben über das erfolgte Anschließen, insbesondere die erfolgte Verdrahtung, zuvor identifizierter Verbindungsleitungen zu empfangen.

Weiterhin ist die Visualisierungseinrichtung vorzugsweise dazu eingerichtet, die Nutzerausgabe über das Anschließen, insbesondere die Verdrahtung, einer identifizierten Verbindungsleitung abhängig von Nutzereingaben über das erfolgte Anschließen, insbesondere die erfolgte Verdrahtung, anderer, zuvor identifizierter Verbindungsleitungen zu erzeugen. Auf diese Weise kann der Nutzer nach erfolgtem Anschließen, insbesondere erfolgter Verdrahtung, einer Verbindungsleitung dies an das System zurückmelden, so dass eine Protokollierung des erfolgten Anschließens, insbesondere der erfolgten Verdrahtung möglich ist. Weiterhin ist es möglich, die weiteren Nutzerausgaben an den aktuellen Stand des Anschlussvorgangs, insbesondere Verdrahtungsvorgangs, anzupassen. Beispielsweise kann eine von der Nutzerausgabe umfasste Darstellung eines virtuellen Schaltschranks bzw. einer virtuellen Montageplatte auch Darstellungen von bereits zuvor angeschlossenen, insbesondere verdrahteten, Verbindungsleitungen umfassen, so dass die Darstellung des Schaltschranks bzw. der Montageplatte der aktuellen Installationssituation besser entspricht und der Techniker die Position der aktuell identifizierten Verbindungsleitung relativ zu den zuvor verlegten Verbindungsleitungen erkennen kann.

Bei einer weiteren Ausführungsform weist das System eine Steuereinrichtung auf, die dazu eingerichtet ist, die Durchführung des zuvor beschriebenen Verfahrens oder einer Ausführungsform davon zu bewirken. Zu diesem Zweck umfasst das System insbesondere einen Speicher, auf dem ein Computerprogramm, insbesondere das zuvor beschriebene Computerprogramm, gespeichert ist, deren Ausführung auf mindestens einem Prozessor der Steuereinrichtung die Durchführung des Verfahrens veranlasst.

Bei einer weiteren Ausführungsform des Verfahrens wird ein virtuelles Modell des herzustellenden Schaltschranks bzw. des herzustellenden Montagesystems, insbesondere mit den darin bzw. daran anzuordnenden Komponenten, erzeugt und auf Grundlage des virtuellen Modells der Anschlussplan, insbesondere Verdrahtungsplan, erzeugt. Insbesondere können auf Grundlage des virtuellen Modells die zum Anschließen, insbesondere zur Verdrahtung, der einzelnen Komponenten erforderlichen Verbindungsleitungen definiert werden, zum Beispiel hinsichtlich ihrer Art, ihrer Länge und/oder ihrer Verlegewege. Auf Grundlage der so definierten Verbindungsleitungen wird dann vorzugsweise der Anschlussplan, insbesondere Verdrahtungsplan erzeugt. Der auf diese Weise erzeugte Anschlussplan, insbesondere Verdrahtungsplan, kann beispielsweise auf einem Speicher des Systems abgespeichert werden.

Weiterhin können die Verbindungsleitungen auf Grundlage der Definition der zum Anschließen, insbesondere zur Verdrahtung, erforderlichen Verbindungsleitungen konfektioniert werden, so dass für das Anschließen, insbesondere die Verdrahtung, der in dem Schaltschrank bzw. an dem Montagesystem angeordneten Komponenten eine Menge passender vorkonfektionierter Verbindungsleitungen zur Verfügung steht.

Den einzelnen auf Grundlage des virtuellen Modells des Schaltschranks bzw. des Montagesystems definierten Verbindungsleitungen wird jeweils die die betreffende Verbindungsleitung identifizierende Kennung zugewiesen und kann bei der Konfektionierung der betreffenden Verbindungsleitungen direkt auf diese aufgebracht, insbesondere aufgedruckt werden. Der Anschlussplan, insbesondere Verdrahtungsplan, wird vorzugsweise derart erzeugt, dass die Kennungen der einzelnen Verbindungsleitungen den Informationen zum Anschließen, insbesondere zur Verdrahtung, der jeweiligen Verbindungsleitungen zugewiesen sind. Auf diese Weise können die Informationen zum Anschließen, insbesondere zur Verdrahtung, einer Verbindungsleitung für die Erzeugung der Nutzerausgabe als Funktion der Kennung aus dem Anschlussplan, insbesondere Verdrahtungsplan, abgerufen werden.

Weitere Vorteile und Merkmale des Verfahrens, des Systems, der Verwendung und des Computerprogramms können der folgenden Beschreibung von Ausführungsbeispielen entnommen werden, wobei auf die beigefügte Zeichnung Bezug genommen wird.

In der Zeichnung zeigen
Fig. 1 ein erstes Ausführungsbeispiel des Systems und des Verfahrens,
Fig. 2 ein zweites Ausführungsbeispiel des Systems und des Verfahrens,
Fig. 3 eine beispielhafte Nutzerausgabe,
Fig. 4 ein weiteres Ausführungsbeispiel des Systems und des Verfahrens und
Fig. 5 ein Ausführungsbeispiel einer nicht zur Erfindung gehörenden Erfassungseinheit.

Die Figuren zeigen Systeme und Verfahren zur automatisierten Unterstützung eines Verdrahtungsvorgangs. In entsprechender Weise können die Systeme und Verfahren jedoch auch dazu vorgesehen und ausgelegt sein, um Verbindungsleitungen für pneumatische oder hydraulische Verbindungen, d.h. insbesondere zur automatisierten Unterstützung eines Verrohrungs- bzw. Verschlauchungsvorgangs, anzuschließen.

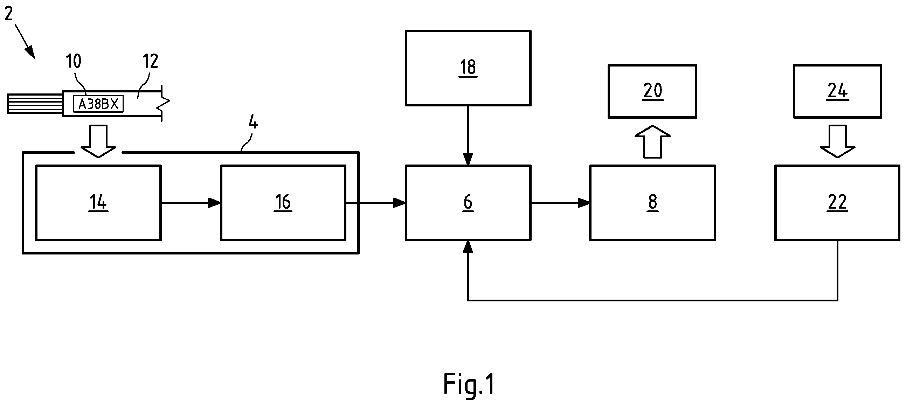

Figur 1 zeigt ein erstes Ausführungsbeispiel des erfindungsgemäßen Systems in schematischer Darstellung. Das System 2 zur automatisierten Unterstützung eines Anschlussvorgangs von in einem Schaltschrank oder an einem Montagesystem, wie einer Montageplatte, angeordneten Komponenten umfasst eine Erfassungseinrichtung 4, eine Visualisierungseinrichtung 6 und eine Ausgabeeinrichtung 8.

Die Erfassungseinrichtung 4 ist dazu eingerichtet, eine Kennung 10 einer Verbindungsleitung 12 zu erfassen. Zu diesem Zweck kann die Erfassungseinrichtung 4 beispielsweise eine Kamera 14 oder alternativ einen Scanner wie zum Beispiel einen Laserscanner aufweisen. Die Verarbeitungseinrichtung 16 untersucht die mit der Kamera 14 aufgenommenen Bilddaten mittels bildverarbeitungstechnischer Verfahren auf das Vorliegen einer Kennung einer Verbindungsleitung und erzeugt einen digitalen Code für die aufgefundene Kennung, so dass die erfasste Kennung in Form des digitalen Codes durch die Visualisierungseinrichtung 6 zur Erzeugung einer Nutzerausgabe weiterverarbeitet werden kann.

Die Visualisierungseinrichtung 6 ist dazu eingerichtet, abhängig von der erfassten Kennung und einem Anschlussplan, beispielsweise einem Verdrahtungsplan 18, eine visuelle Nutzerausgabe 20 über das Anschließen, beispielsweise über die Verdrahtung, der durch die Kennung 10 identifizierten Verbindungsleitung 12 zu erzeugen. Der Anschlussplan 18 kann zum Beispiel auf einem elektronischen Speicher des Systems 2 gespeichert sein und enthält Informationen über die jeweiligen Anschlusspunkte und Verlegewege der anzuschließenden Verbindungsleitungen.

Zur Erzeugung der visuellen Nutzerausgabe 20 ruft die Visualisierungseinrichtung 6 die Informationen über das Anschließen, beispielsweise über die Verdrahtung, der anhand der erfassten Kennung 10 identifizierten Verbindungsleitung 12 aus dem Anschlussplan 18 ab und erzeugt eine entsprechende grafische Darstellung, beispielsweise mit einer schematischen Darstellung des Schaltschranks und einer hervorgehobenen Darstellung der identifizierten Verbindungsleitung 12 im verlegten Zustand.

Die Ausgabeeinrichtung 8 ist schließlich dazu eingerichtet, die von der Visualisierungseinrichtung 6 erzeugte Nutzerausgabe 20 an einen Nutzer auszugeben. Zu diesem Zweck kann die Ausgabeeinrichtung 8 beispielsweise einen Bildschirm aufweisen.

Das System 2 kann auch dazu eingerichtet sein, die Nutzerausgabe 20 als Augmented-Reality-Darstellung zu erzeugen. Zu diesem Zweck kann die Visualisierungseinrichtung 6 zur Erzeugung der Nutzerausgabe 20 beispielsweise ein von der Kamera 14 erfasstes Bild vom Schaltschrank mit den darin angeordneten anzuschließenden, insbesondere zu verdrahtenden, Komponenten mit einer hervorgehobenen Darstellung der identifizierten Verbindungsleitung 12 im angeschlossenen Zustand überlagern.

Das System 2 kann darüber hinaus auch noch eine Eingabeeinrichtung 22 aufweisen, die zum Empfang einer Nutzereingabe 24 über das erfolgte Anschließen einer zuvor identifizierten Verbindungsleitung eingerichtet ist. Auf diese Weise kann das System 2 den tatsächlich durch den Techniker durchgeführten Anschlussvorgang protokollieren.

Die Visualisierungseinrichtung 6 kann zudem dazu eingerichtet sein, die Nutzerausgabe 20 über das Anschließen der identifizierten Verbindungsleitung auch abhängig von der oder den zuvor empfangenen Nutzereingaben 24 über das erfolgte Anschließen von Verbindungsleitungen zu erzeugen. Beispielsweise kann die Nutzerausgabe 20 neben einer hervorgehobenen Darstellung der anhand der erfassten Kennung 10 identifizierten Verbindungsleitung 12 auch Darstellungen weiterer Verbindungsleitungen umfassen, für die Nutzereingaben 24 über deren bereits erfolgte Verlegung empfangen wurden. Dies ermöglicht dem Nutzer beispielsweise eine bessere Orientierung am Schaltschrank, indem er die Lage der neu anzuschließenden Verbindungsleitung zu den bereits angeschlossenen Verbindungsleitungen 12 aus der Nutzerausgabe 20 ablesen kann.

Im Folgenden wird ein Beispiel beschrieben, wie ein Techniker das System 2 zum Anschließen, insbesondere zur Verdrahtung, von in einem Schaltschrank angeordneten Komponenten mit einer Menge vorkonfektionierter Verbindungsleitungen einsetzen und durch das System 2 unterstützt werden kann. Das Beispiel beinhaltet auch ein Ausführungsbeispiel des Verfahrens zur automatisierten Unterstützung eines Anschlussvorgangs, insbesondere Verdrahtungsvorgangs, von in einem Schaltschrank angeordneten Komponenten.

Zu Beginn des Anschlussvorgangs wählt der Techniker eine Verbindungsleitung 12 aus einer ihm zum Anschließen von in einem Schaltschrank angeordneten Komponenten zur Verfügung stehenden Menge vorkonfektionierter Verbindungsleitungen mit jeweiligen Kennungen aus und positioniert die Kennung 10 auf der ausgewählten Verbindungsleitung 12 vor der Kamera 14 der Erfassungseinrichtung 4, so dass die Erfassungseinrichtung 4 die Kennung 10 der ausgewählten Verbindungsleitung 12 erfasst und einen digitalen Code für die Kennung 10 erzeugt, der an die Visualisierungseinrichtung 6 übergeben wird.

Die Visualisierungseinrichtung 6 ruft mit dem digitalen Code für die Kennung 10 aus dem Anschlussplan 18 Informationen über das Anschließen der durch die Kennung 10 identifizierten Verbindungsleitung 12 ab und erzeugt mit diesen Informationen eine Nutzerausgabe 20, beispielsweise mit einer grafischen Darstellung des Schaltschranks und einer Darstellung der identifizierten Verbindungsleitung 12 im angeschlossenen Zustand. Die erzeugte Nutzerausgabe 20 wird dann über die Ausgabeeinrichtung 8 ausgegeben, so dass der Techniker die für das Anschließen der ausgewählten Verbindungsleitung 12 notwendigen Informationen entnehmen und das Anschließen manuell durchführen kann.

Wenn das System 2 über eine Eingabeeinrichtung 22 verfügt, kann der Techniker nach erfolgtem Anschließen und Verlegen der ausgewählten Verbindungsleitung 12 dies als Nutzereingabe 24 an der Eingabeeinrichtung 22 eingeben.

Anschließend kann der Techniker die nächste Verbindungsleitung aus der Menge vorkonfektionierter Verbindungsleitungen auswählen und deren Kennung vor der Kamera 14 positionieren, worauf der zuvor beschriebene Verfahrenslauf für die neue Verbindungsleitung erneut abläuft. Auf diese Weise kann der Techniker nach und nach die für die Verlegung der einzelnen vorkonfektionierten Verbindungsleitungen erforderlichen Informationen automatisch abrufen, so dass Verlegefehler vermieden werden.

Werden über die Eingabeeinrichtung 22 Nutzereingaben über das erfolgte Anschließen, insbesondere die erfolgte Verdrahtung, zuvor identifizierter Verbindungsleitungen erfasst, so kann die Visualisierungseinrichtung 6 dies bei der Erzeugung der Nutzerausgabe 20 berücksichtigen, beispielsweise indem sie in der grafischen Darstellung des Schaltschranks die bereits verlegten Verbindungsleitungen ebenfalls darstellt, um auf diese Weise die reale Ansicht des Schaltschranks nachzubilden und dem Techniker das Anschließen der aktuellen Verbindungsleitung 12 zu vereinfachen.

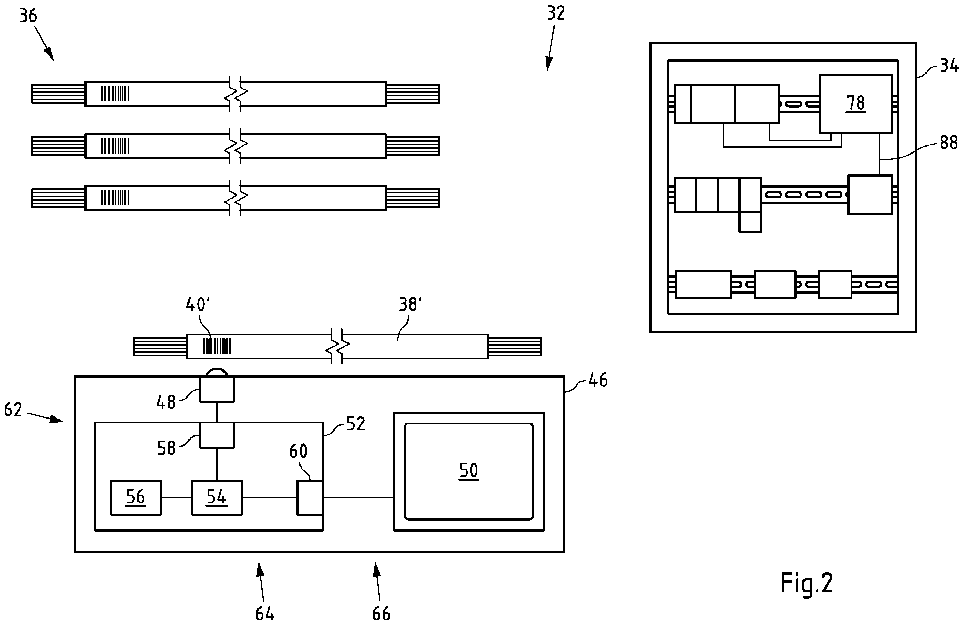

Figur 2 zeigt ein weiteres Ausführungsbeispiel eines Systems 32 zur automatisierten Unterstützung eines Anschlussvorgangs, insbesondere Verdrahtungsvorgangs, von in einem Schaltschrank 34 angeordneten Komponenten mit einer Menge 36 vorkonfektionierter Verbindungsleitungen 38. Die Verbindungsleitungen 38 können zum Beispiel im Vorfeld anhand eines virtuellen Routings an einem virtuellen Modell des Schaltschranks 34 definiert und anschließend entsprechend konfektioniert worden sein. Auf diese Weise stehen dem Techniker vor Beginn des Anschlussvorgangs die hierfür erforderlichen Verbindungsleitungen 38 mit jeweils der richtigen Art und Länge sowie ggf. mit den richtigen Anschlüssen zur Verfügung.

Die einzelnen Verbindungsleitungen 38 sind jeweils mit Kennungen 40 bedruckt, anhand derer sich die Verbindungsleitungen 38 voneinander unterscheiden lassen. Vorzugsweise erlauben die Kennungen 40 eine eindeutige Identifizierung der einzelnen Verbindungsleitungen 38 innerhalb der Menge 36. In Fig. 2 ist sind die Kennungen 40 exemplarisch als Barcode dargestellt. Es sind jedoch auch andere Kennungen denkbar, zum Beispiel auf die Verbindungsleitungen 38 aufgedruckte Zeichenfolgen.

Das System 32 zur Unterstützung des Anschlussvorgangs umfasst ein mobiles Gerät 46, beispielsweise in Form eines Smartphones oder eines Tablet-Computers, mit einem Kameramodul 48, einer Nutzerschnittstelle 50 in Form eines Touchscreens und einer Steuereinrichtung 52 mit mindestens einem Prozessor 54 und einem damit verbundenen elektronischen Speicher 56 sowie Schnittstellen 58 und 60 zur Kommunikation mit dem Kameramodul 48 und dem Touchscreen 50. Auf dem Speicher 56 der Steuereinrichtung 52 ist ein Computerprogramm gespeichert, dessen Ausführung auf dem mindestens einen Prozessor 54 der Steuereinrichtung 52 die Durchführung eines Verfahrens zur automatisierten Unterstützung eines Anschlussvorgangs der in dem Schaltschrank 34 angeordneten Komponenten bewirkt.

Die Kamera 48 ist dazu eingerichtet, Bilddaten zu erfassen und die Steuereinrichtung 52 ist dazu eingerichtet, bei Ausführung des auf dem Speicher 56 gespeicherten Computerprogramms die über die Schnittstelle 58 von der Kamera 48 empfangenen Bilddaten dahingehend zu analysieren, ob diese eine Kennung 40' einer Verbindungsleitung 38' aus der Menge 36 enthalten und, wenn dies der Fall ist, einen digitalen Code für die Kennung 40' zu erzeugen. Zu diesem Zweck kann beispielsweise auf dem Speicher 56 eine Liste mit den Kennungen 40 der Verbindungsleitungen 38 aus der Menge 36 hinterlegt sein, so dass die Steuereinrichtung 52 durch Vergleich des erzeugten Codes mit den in der Liste gespeicherten Kennungen bestimmen kann, ob die erfasste Kennung 40' zu einer Verbindungsleitung 38' aus der Menge 36 zum Anschließen, insbesondere zur Verdrahtung, der in dem Schaltschrank 34 angeordneten Komponenten stammt.

Die Kamera 48 kann dazu eingerichtet sein, permanent Bilddaten zu erfassen, und die Steuereinrichtung 52 kann dazu eingerichtet sein, die erfassten Bilddaten kontinuierlich nach einer Kennung zu durchsuchen, bis eine Kennung 40' bei Positionierung einer Verbindungsleitung 38' aus der Menge 36 vor der Kamera 48 erkannt wird. Alternativ kann die Steuereinrichtung 52 auch dazu eingerichtet sein, auf eine Nutzereingabe über den Touchscreen 50 ein von der Kamera 48 erfasstes Bild nach einer Kennung zu durchsuchen.

Die Ausführung des im Speicher 56 gespeicherten Computerprogramms auf dem mindestens einen Prozessor 54 bewirkt weiterhin, dass abhängig von der erfassten Kennung 40' bzw. dem dafür erzeugten Code eine Nutzerausgabe über das Anschließen, insbesondere über die Verdrahtung, der über die Kennung 40' identifizierten Verbindungsleitung 38' erzeugt wird. Zu diesem Zweck ist auf dem Speicher 56 ein Anschlussplan, beispielsweise ein Verdrahtungsplan, gespeichert, der Informationen über das Anschließen der Verbindungsleitungen 38 aus der Menge 36 enthält. Beispielsweise kann der Anschlussplan in Form eines virtuellen Modells des Schaltschranks 34 gespeichert sein, das neben Informationen über den Schaltschrank, beispielsweise über dessen Dimensionen und die darin anzuordnenden bzw. angeordneten Komponenten, auch Informationen über die Anschlusspunkte und/oder über die Verlegewege der Verbindungsleitungen 38 enthält. Im Anschlussplan ist den Informationen zu den einzelnen Verbindungsleitungen 38 vorzugsweise die jeweils zugehörige Kennung 40 der Verbindungsleitung 38 zugeordnet, so dass die Steuereinrichtung 52 die Informationen für die aktuell anzuschließende Verbindungsleitung 38 aus dem Anschlussplan abhängig von der erfassten Kennung 40' bzw. dem digitalen Code dafür abrufen und für die Erzeugung der Nutzerausgabe verwenden kann.

Nach der Erzeugung der Nutzerausgabe bewirkt die Steuereinrichtung 52 deren Anzeige auf dem Touchscreen 50, so dass der Techniker über den Touchscreen 50 die Informationen erhält, die er zum Anschließen der entsprechenden Verbindungsleitung 38 benötigt.

Die Kamera 48 und die Steuereinrichtung 52 mit dem zur Erfassung einer Kennung vorgesehenen Programmteil des Computerprogramms auf dem Speicher 56 bilden zusammen eine Erfassungseinrichtung 62 des Systems 32. Weiterhin bildet die Steuereinrichtung 52 mit dem zur Erzeugung einer Nutzerausgabe vorgesehenen Programmteil des Computerprogramms auf dem Speicher 56 eine Visualisierungseinrichtung 64 des Systems 32. Zudem bilden der Touchscreen 50 und die Steuereinrichtung 52 mit dem für die Ausgabe der Nutzerausgabe vorgesehenen Programmteil des Computerprogramms auf dem Speicher 56 eine Ausgabeeinrichtung 66 des Systems. Die einzelnen Einrichtungen des Systems müssen demnach nicht notwendigerweise durch verschiedene Hardware-Komponenten gebildet werden, sondern können sich zum Beispiel eine gemeinsame Steuereinrichtung teilen, auf der ein Computerprogramm mit entsprechenden Modulen für die einzelnen Einrichtungen läuft.

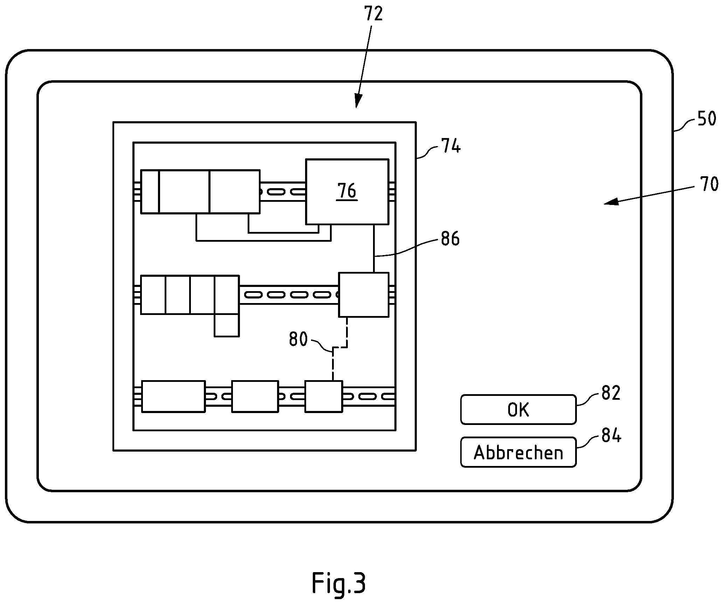

Anhand der Fig. 3 wird nun ein Beispiel einer von der Steuereinrichtung 52 erzeugten und über den Touchscreen 50 angezeigte Nutzerausgabe erläutert.

Figur 3 zeigt den Touchscreen 50 mit einer darauf angezeigten Nutzerausgabe 70, die von der Steuereinrichtung 52 für die anhand der erfassten Kennung 40' identifizierte Verbindungsleitung 38' erzeugt wurde.

Die Nutzerausgabe 70 umfasst eine Darstellung 72 des Schaltschranks 34. Diese kann beispielsweise durch ein auf dem Speicher 56 gespeichertes, virtuelles Modell des Schaltschranks 34 erzeugt worden sein. Die Darstellung 72 umfasst eine Darstellung 74 des Schaltschranks an sich sowie Darstellungen 76 darin eingebauter Komponenten 78. Darüber hinaus umfasst die Darstellung 72 eine hervorgehobene Darstellung 80 der identifizierten Verbindungsleitung 38' im angeschlossenen, beispielsweise verdrahteten, Zustand, so dass der Techniker der Nutzerausgabe 70 auf intuitive Weise entnehmen kann, wo, d.h. an welchen Anschlusspunkten er die ausgewählte Verbindungsleitung 38' mit den Komponenten 78 im Schaltschrank 34 zu verbinden hat und welcher Verlegeweg im Schaltschrank 34 zu wählen ist. Die hervorgehobene Darstellung 80 mit der identifizierten Verbindungsleitung 38' im angeschlossenen Zustand ist nur beispielhaft. Stattdessen könnte die Darstellung 80 z.B. auch zwei Pfeile umfassen, die die Position der jeweiligen Anschlusspunkte der Verbindungsleitung 38' anzeigen.

Alternativ oder zusätzlich kann die Darstellung 72 auch eine Listendarstellung aller Verbindungsleitungen umfassen, wobei die identifizierte Verbindungsleitung 38' zum Beispiel hervorgehoben sein kann und Informationen zum Anschließen dieser Verbindungsleitung 38' angezeigt werden.

Auf dem Touchscreen 50 sind weiterhin virtuelle Knöpfe 82, 84 dargestellt, über die der Nutzer eine Nutzereingabe vornehmen kann, indem er den Touchscreen 50 im Bereich eines der beiden Knöpfe berührt. Durch einen Druck auf den Knopf 82 kann er bestätigen, dass er das Anschließen der Verbindungsleitung 38' durchgeführt hat; durch Betätigen des Knopfs 84 kann er den Vorgang abbrechen und stattdessen zum Beispiel eine andere Verbindungsleitung aus der Menge 36 der Verbindungsleitungen auswählen.

Die Nutzereingaben des Nutzers über den Touchscreen 50 werden von der Steuereinrichtung 52 registriert und auf dem Speicher 56 gespeichert, so dass die Steuereinrichtung 52 über die Information verfügt, welche der Verbindungsleitungen 38 aus der Menge 36 bereits angeschlossen worden sind. Diese Information kann beispielsweise bei der Erzeugung nachfolgender Nutzerausgaben verwendet werden. So ist es insbesondere denkbar, dass die Nutzerausgabe 70 auch Darstellungen 86 von zuvor verlegten Verbindungsleitungen 88 umfassen kann, so dass der Techniker der Nutzerausgabe 70 die Lage der neuen Verbindungsleitung 38' relativ zu den bereits verlegten Verbindungsleitungen 88 intuitiv entnehmen kann.

Das System 32 kann auch für eine Augmented-Reality-Darstellung ausgebildet sein. Zu diesem Zweck veranlasst die Ausführung des auf dem Speicher 56 gespeicherten Computerprogramms auf dem mindestens einen Prozessor 54 vorzugsweise, dass ein mit der Kamera 48 erfasstes reales Bild des Schaltschranks 34 und der darin angeordneten Komponenten mit einer Darstellung 80 der identifizierten Verbindungsleitung 38' derart überlagert wird, dass die Darstellung 80 die Position der Verbindungsleitung 38' im verlegten Zustand über dem realen Bild des Schaltschranks und der darin angeordneten Komponenten anzeigt.

Anstelle eines Touchscreens 50 kann auch ein einfacher Bildschirm vorgesehen sein. Für eine Nutzereingabe können in diesem Fall zum Beispiel Tasten, beispielsweise eine Tastatur, eine Computermaus oder ein Touchpad vorgesehen sein.

Anstelle oder zusätzlich zu einem Touchscreen 50 oder einem einfachen Bildschirm kann das System auch eine Datenbrille aufweisen, über die die Nutzerausgabe ausgegeben wird. Die Datenbrille kann beispielsweise über eine Funkverbindung mit der Steuereinrichtung 52 verbunden sein.

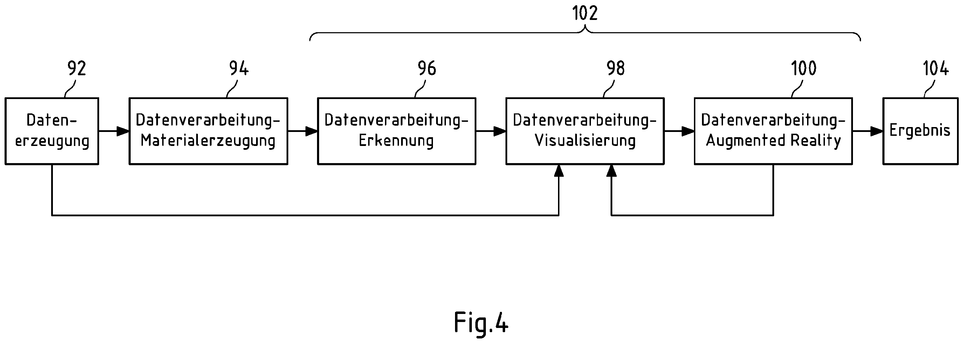

Figur 4 zeigt ein Beispiel eines komplett digital unterstützten Workflows von der Planung eines Schaltschranks über die Herstellung vorkonfektionierter Verbindungsleitungen sowie das nachfolgende Verfahren zur automatisierten Unterstützung eines Anschlussvorgangs, beispielsweise eines Verdrahtungsvorgangs, umfassend die Erkennung der Verbindungsleitung, die Interpretation der Verbindung, die Anzeige einer entsprechenden Nutzerausgabe, und schließlich als Ergebnis den fertiggestellten Schaltschrank. Die Figur 4 zeigt insbesondere, wie sich das vorliegend beschriebene Verfahren und ein zur Durchführung des Verfahrens eingerichtetes System, wie zum Beispiel dem System 2 oder 32, in einen solchen Workflow einfügen lässt.

Im ersten Schritt 92 wird zunächst mittels eines dafür vorgesehenen Computerprogramms ein virtuelles Modell des herzustellenden Schaltschranks erzeugt, indem der virtuelle Schaltschrank virtuell mit den vorgesehenen Komponenten bestückt wird und die zum Anschließen, insbesondere zur Verdrahtung der einzelnen Komponenten erforderlichen Verbindungsleitungen hinsichtlich ihrer Art und ggf. auch ihrer Verlegewege definiert werden. Bei diesem Schritt wird vorzugsweise auch der Anschlussplan für das System 2 oder 32 erzeugt, der später zur Erzeugung der Nutzerausgaben zum Anschließen der einzelnen Verbindungsleitungen dient.

Im nächsten Schritt 94 werden anhand des im ersten Schritt 92 erzeugten Datenmodells des Schaltschranks die zu konfektionierenden Verbindungsleitungen bestimmt und auf dieser Datenbasis produziert. Die einzelnen Verbindungsleitungen werden jeweils mit individuellen Kennungen versehen, beispielsweise durch Aufdrucken einer nummerischen Beschriftung oder eines Barcodes, anhand derer sich die einzelnen Verbindungsleitungen innerhalb der Menge der für das Anschließen der in dem Schaltschrank anzuordnenden bzw. angeordneten Komponenten konfektionierten Verbindungsleitungen jeweils eindeutig identifizieren lassen.

Die nachfolgenden drei Schritte 96, 98, 100 entsprechen nun einem Verfahren zur automatisierten Unterstützung des Anschlussvorgangs, wie es bereits zuvor beschrieben wurde (vgl. Klammer 102).

Im Schritt 96 wird mittels einer Erfassungseinrichtung eine Kennung einer vorkonfektionierten Verbindungsleitung für das Anschließen, insbesondere die Verdrahtung, von in einem Schaltschrank angeordneten Komponenten erfasst.

Im Schritt 98 wird eine visuelle Nutzerausgabe über das Anschließen der über die erfasste Kennung identifizierten Verbindungsleitung erzeugt. Die Visualisierung erfolgt anhand der zuvor erfassten Kennung gezielt für die in Schritt 96 identifizierte Verbindungsleitung und abhängig von dem vorzugsweise in Schritt 92 erzeugten Anschlussplan (vgl. Pfeil vom Schritt 92 zu Schritt 98), der beispielsweise in Form eines virtuellen Modells des Schaltschranks vorliegt und Informationen über die Anschlusspunkte und den Verlegeweg der identifizierten Verbindungsleitung enthält.

Im Schritt 100 erfolgt die Ausgabe der in Schritt 98 erzeugten Nutzerausgabe über eine Ausgabevorrichtung wie zum Beispiel einen Bildschirm oder eine Datenbrille. Vorzugsweise erfolgt die Ausgabe als Augmented-Reality-Darstellung, so dass der Nutzer die für die manuelle Verlegung der identifizierten Verbindungsleitung erforderlichen Arbeitsanweisungen, d.h. die Anbindungspunkte und den Verlegeweg der betreffenden Verbindungsleitung, intuitiv und in räumlichem Bezug zum realen Schaltschrank erfassen kann.

Die Schritte 96, 98 und 100 werden nacheinander für die einzelnen vorkonfektionierten Verbindungsleitungen wiederholt, bis schließlich im Schritt 104 als Ergebnis des gesamten Verfahrens der Schaltschrank mit den darin angeordneten, vollständig angeschlossenen, insbesondere verdrahteten, Komponenten fertiggestellt ist.

Vorzugsweise kann der Nutzer des Systems das erfolgte Anschließen der jeweiligen Verbindungsleitung im Schritt 100 über eine Eingabeeinrichtung bestätigen. Diese Information wird an die Visualisierungseinrichtung übermittelt, so dass diese die Informationen über bereits verlegte Verbindungsleitungen bei der Erzeugung von Nutzerausgaben nachfolgend identifizierter Verbindungsleitungen berücksichtigen kann (vgl. Pfeil vom Schritt 100 zum Schritt 98).

Das Verfahren zur automatisierten Unterstützung eines Anschlussvorgangs von in einem Schaltschrank oder an einem Montagesystem, wie einer Montageplatte, angeordneten Komponenten kann insbesondere auch die vorbereitenden Schritte 92 und 94 umfassen, bei denen der Anschlussplan und die vorkonfektionierten Verbindungsleitungen erzeugt werden.

Das gesamte Verfahren von Schritt 92 bis 104 stellt ein Beispiel für ein Verfahren zum Anschließen, insbesondere zur Verdrahtung, von in einem Schaltschrank bzw. an einem Montagesystem, z.B. einer Montageplatte, angeordneten Komponenten dar. Mit diesem Verfahren wird ein komplett digital unterstützter Workflow von der Planung über die Konfektionierung der Verbindungsleitungen, deren Erkennung und Interpretation bis zum Anschluss der Verbindungsleitungen an den Komponenten im realen Schaltschrank bzw. am Montagesystem, z.B. einer Montageplatte, erreicht.

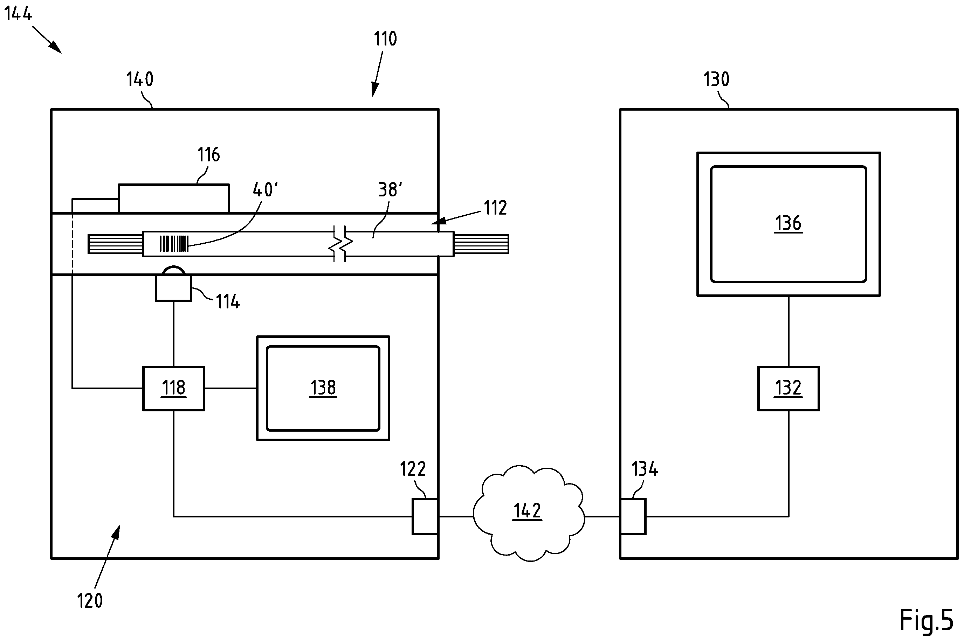

Figur 5 zeigt ein Ausführungsbeispiel einer nicht zur Erfindung gehörenden Erfassungseinheit zum Erfassen einer Kennung 40' einer Verbindungsleitung 38'. Die Erfassungseinheit 110 umfasst eine Aufnahme 112, in die eine zu identifizierende Verbindungsleitung 38' eingelegt werden kann. Im Bereich der Aufnahme 112 ist ein Kameramodul 114 angeordnet, mit den Bilddaten von einer in die Aufnahme 112 eingelegten Verbindungsleitung 38'erfasst werden können.

Die Aufnahme 112 ist vorliegend in Form eines an beiden Seiten offenen, kanalförmigen Hohlraums ausgebildet, so dass die Verbindungsleitung 38' in die Aufnahme 112 eingeschoben werden kann. Da die Aufnahme 112 beidseitig geöffnet ist, kann die Verbindungsleitung 38' soweit in die Aufnahme 112 eingeschoben werden, bis die Kennung 40' der Verbindungsleitung 38' vom Kameramodul 114 erfasst werden kann. Dadurch kann die Kennung 40' unabhängig von deren Position auf der Verbindungsleitung 38' erfasst werden.

Alternativ kann die Aufnahme 112 auch nur einseitig geöffnet sein, insbesondere wenn die Kennung 40' an einer vorgegebenen Position der Verbindungsleitung 38' vorgesehen ist, zum Beispiel in einem bestimmten Abstand von einem Ende der Verbindungsleitung 38'. Die Tiefe der Aufnahme 112 ist dann vorzugsweise so angepasst, dass die Kennung 40' im Sichtbereich des Kameramoduls 114 angeordnet ist, wenn die Verbindungsleitung 38' bis zum Anschlag in die Aufnahme 112 eingeschoben ist.

Die Aufnahme 112 weist vorzugsweise eine Ausprägung in Form einer Kante auf und das Kameramodul 114 ist vorzugsweise so angeordnet, dass die Kante im Sichtbereich des Kameramoduls 114 liegt. Beispielsweise kann die Aufnahme 112 einen dreieckigen Querschnitt aufweisen bzw. prismenförmig sein, wobei eine Ecke des Dreiecks bzw. eine Kante der Prismenform im Sichtbereich des Kameramoduls 114 liegt. Durch die Kante wird ein definierter Anlagepunkt für die Verbindungsleitung 38' vorgegeben, wodurch die Positionierung der Verbindungsleitung 38' in der Aufnahme und der Kennung 40' im Sichtbereich des Kameramoduls 114 erleichtert wird.

Die Erfassungseinheit 110 weist weiterhin eine Beleuchtungseinrichtung 116 auf, mit der die Aufnahme 112 im Bereich des Kameramoduls 114 ausgeleuchtet werden kann, so dass die Kennung 40' unabhängig von den äußeren Lichtverhältnissen zuverlässig erfasst werden kann. Die Beleuchtungseinrichtung 116 erstreckt sich vorzugsweise derart quer zur Längserstreckung der Aufnahme 112, dass mindestens 180° der gekrümmten Oberfläche einer in der Aufnahme 112 angeordneten Verbindungsleitung ausgeleuchtet werden, so dass die auf der gekrümmten Oberfläche einer Verbindungsleitung aufgedruckte Kennung zuverlässig erfasst werden kann.

Die Erfassungseinheit kann optional einen Bildschirm 138 aufweisen, auf dem das vom Kameramodul 114 erfasste Bild ausgegebenen wird, um dem Techniker die Positionierung der Verbindungsleitung 38' in der Aufnahme 112 zu erleichtert. Insbesondere kann der Techniker dadurch die Kennung 40' einfacher im Sichtfeld des Kameramoduls 114 positionieren.

Weiterhin weist die Erfassungseinheit 110 eine Steuereinrichtung 118 auf, die dazu eingerichtet ist, in den erfassten Bilddaten eine Kennung 40' einer Verbindungsleitung 38' aufzufinden und einen digitalen Code für die aufgefundene Kennung zu erzeugen. Die Steuereinrichtung 118 kann weiterhin die Funktion des Kameramoduls 114 und der Beleuchtungseinrichtung 116 steuern.

Außerdem weist die Erfassungseinheit 110 eine Übermittlungseinrichtung 120 auf, die dazu eingerichtet ist, den digitalen Code für die aufgefundene Kennung 40' an eine Visualisierungseinrichtung zur Erzeugung einer Nutzerausgabe über das Anschließen der durch die Kennung identifizierten Verbindungsleitung zu übertragen. Die Übermittlungseinrichtung 120 ist vorliegend dazu eingerichtet, den digitalen Code für die Kennung 40' an einen Server 130 zu übertragen, der eine Steuereinrichtung 132 aufweist, auf der ein Computerprogramm zur Erzeugung einer visuellen Nutzerausgabe abhängig von dem digitalen Code läuft. Entsprechend wird die Übermittlungseinrichtung 120 bei der Erfassungseinheit 110 einerseits durch eine Netzwerkschnittstelle 122, zum Beispiel eine LAN- oder WLAN-Schnittstelle, und durch einen Teil des auf der Steuereinrichtung 118 laufenden Computerprogramms gebildet, der die Übertragung des digitalen Codes für die Kennung über die Netzwerkschnittstelle 122 und ein Netzwerk 142 an den Server 130 veranlasst.

Der Server 130, der zum Empfang des digitalen Codes über eine entsprechende Netzwerkschnittstelle 134 verfügt, kann dann aus dem übermittelten digitalen Code für die Kennung 40' und einem auf einem Speicher des Servers 130 gespeicherten Anschlussplan, der beispielsweise ein virtuelles Modell des Schaltschranks mit den darin angeordneten, anzuschließenden Komponenten umfassen kann, eine Nutzerausgabe über das Anschließen der anhand der Kennung 40' identifizierten Verbindungsleitung 38' erzeugen. Die erzeugte Nutzerausgabe kann dann auf einem Bildschirm 136 des Servers 130 ausgegeben werden. Zusätzlich oder alternativ kann die Nutzerausgabe auch über eine Datenbrille ausgegeben werden, die über eine drahtgebundene oder drahtlose Kommunikationsverbindung mit dem Server 130 oder mit der Erfassungseinheit 110 gekoppelt ist..

Zudem ist es auch denkbar, dass die erzeugte Nutzerausgabe vom Server 130 an die Erfassungseinheit 110 übermittelt und über einen optional vorgesehenen Bildschirm 138 der Erfassungseinheit 110 ausgegeben wird.

Die Erfassungseinheit 110 und der Server 130 bilden zusammen ein System 144 zur automatisierten Unterstützung eines Anschlussvorgangs von in einem Schaltschrank oder an einem Montagesystem, z.B. einer Montageplatte, angeordneten Komponenten.

Alternativ zur Erzeugung der Nutzerausgabe auf dem Server 130 kann die Nutzerausgabe auch in der Erfassungseinheit 110 selbst erzeugt werden. Beispielsweise kann die Steuereinrichtung 118 dazu eingerichtet sein, abhängig von dem erzeugten Code für die Kennung 40' und einer in einem Speicher der Steuereinrichtung 118 gespeicherten Anschlussplan eine Nutzerausgabe zu erzeugen und z.B. über den Bildschirm 138 der Erfassungseinheit 110 oder über eine mittels einer Kommunikationsverbindung mit dieser verbundenen Datenbrille auszugeben. In diesem Fall stellt die Steuereinrichtung 118 mit einem Teil des auf dieser laufenden Computerprogramms zur Erzeugung der Nutzerausgabe die Visualisierungseinrichtung dar. Die Übertragung des digitalen Codes an die Visualisierungseinrichtung erfolgt in diesem Fall rein softwareseitig, wobei die Steuereinrichtung und ein entsprechender Programmteil die Übertragungseinrichtung darstellen.

Die Erfassungseinheit 110 ist vorliegend als stationäres Gerät ausgebildet, das am Einsatzort in der Nähe des anzuschließenden Schaltschranks aufgestellt werden kann. Zum Schutz vor widrigen Umgebungsbedingungen, wie zum Beispiel Staub oder Feuchtigkeit, umfasst die Erfassungseinheit 110 vorzugsweise eine geeignete Einhausung 140, in der die einzelnen Komponenten der Erfassungseinheit 110 untergebracht sind.

Aus der obigen Beschreibung von Beispielen des Systems, dessen Verwendung, des Verfahrens und des Computerprogramms wird ersichtlich, dass diese eine automatisierte Unterstützung des Anschlussvorgangs von in einem Schaltschrank oder an einem Montagesystem angeordneten Komponenten in einer Weise ermöglichen, dass Fehlanschlüsse vermieden werden, da der durchführende Techniker die für das Anschließen der einzelnen vorkonfektionierten Verbindungsleitungen erforderlichen Informationen intuitiv über die Nutzerausgabe erfassen und umsetzen kann.

## Patentansprüche

1. Verfahren zur automatisierten Unterstützung eines Anschlussvorgangs, insbesondere eines Verdrahtungsvorgangs von in einem Schaltschrank (34) angeordneten Komponenten, bei dem mittels einer Erfassungseinrichtung (4, 62) eine Kennung (10, 40, 40') einer Verbindungsleitung (12, 38, 38', 52) aus einer Menge vorkonfektionierter Verbindungsleitungen (12, 38, 38', 52) zum Anschließen, insbesondere zur Verdrahtung, von in dem Schaltschrank (34) angeordneter Komponenten erfasst wird, wobei die Kennung (10, 40, 40') die Verbindungsleitung (12, 38, 38', 52) identifiziert, bei dem abhängig von der erfassten Kennung (10, 40, 40') und einem Anschlussplan, insbesondere einem Verdrahtungsplan (18), automatisch eine visuelle Nutzerausgabe (20, 70) über das Anschließen, insbesondere über die Verdrahtung, der durch die Kennung (10, 40, 40') identifizierten Verbindungsleitung (12, 38, 38' 52) erzeugt wird und bei dem die erzeugte Nutzerausgabe(20, 70) über eine Ausgabeeinrichtung (8, 66) ausgegeben wird, **dadurch gekennzeichnet, dass** das Erzeugen der visuellen Nutzerausgabe (20, 70) das Erzeugen einer grafischen Darstellung der Anschlusspunkte und des Verlegewegs der Verbindungsleitung (12, 38, 38', 52) aufweist.

2. Verfahren nach Anspruch 1, **dadurch gekennzeichnet, dass** die Nutzerausgabe (20, 70) mittels eines virtuellen Modells des Schaltschranks (34) mit einer Darstellung des Anschließens, insbesondere der Verdrahtung, der identifizierten Verbindungsleitung (12, 38, 38', 52) erzeugt wird.

3. Verfahren nach einem der Ansprüche 1 oder 2, **dadurch gekennzeichnet, dass** die Nutzerausgabe (20, 70) über ein Augmented- Reality-Gerät, insbesondere einen Bildschirm (50, 136, 138) oder eine Datenbrille, ausgegeben wird, wobei ein reales Bild oder ein realer Gegenstand mit der erzeugten Nutzerausgabe (20, 70) überlagert wird.

4. Verfahren nach einem der Ansprüche 1 bis 3, bei dem eine Nutzereingabe (24) über das erfolgte Anschließen, insbesondere über die erfolgte Verdrahtung, einer anderen, zu einem früheren Zeitpunkt identifizierten Verbindungsleitung (88) empfangen wird und bei dem die Nutzerausgabe (20, 70) über das Anschließen, insbesondere über die Verdrahtung, der identifizierten Verbindungsleitung (12, 38, 38', 52) abhängig von der Nutzereingabe (24) über das erfolgte Anschließen, insbesondere über die erfolgte Verdrahtung, der anderen Verbindungsleitung (88) erzeugt wird.

5. System (2, 32) zur automatisierten Unterstützung eines Anschlussvorgangs, insbesondere eines Verdrahtungsvorgangs, von in einem Schaltschrank (34) angeordneten Komponenten, insbesondere zur Durchführung eines Verfahrens nach einem der Ansprüche 1 bis 4, mit einer Erfassungseinrichtung (4, 62, 110), die dazu eingerichtet ist, eine Kennung (10, 40, 40') einer Verbindungsleitung (12, 38, 38', 52) zu erfassen, wobei die Kennung (10, 40, 40') die Verbindungsleitung (12, 38, 38', 52) identifiziert, mit einer Visualisierungseinrichtung (8, 64), die dazu eingerichtet ist, abhängig von der erfassten Kennung (10, 40, 40') und einem Anschlussplan, insbesondere einem Verdrahtungsplan (18), eine visuelle Nutzerausgabe (20, 70) über das Anschließen, insbesondere über die Verdrahtung, der identifizierten Verbindungsleitung (12, 38, 38', 52) zu erzeugen und mit einer Ausgabeeinrichtung (8, 66), die dazu eingerichtet ist, die von der Visualisierungseinrichtung erzeugte Nutzerausgabe (20, 70) an einen Nutzer auszugeben, weiter umfassend eine Menge (36) vorkonfektionierter Verbindungsleitungen (12, 38, 38', 52) zum Anschließen, insbesondere zur Verdrahtung, von in dem Schaltschrank (34) angeordneten Komponenten, wobei jede Verbindungsleitung (12, 38, 38', 52) eine Kennung (10, 40, 40') zur Identifizierung der jeweiligen Verbindungsleitung (12, 38, 38', 52) aufweist, **dadurch gekennzeichnet, dass** die visuelle Nutzerausgabe (20, 70) eine grafische Darstellung der Anschlusspunkte und des Verlegewegs der Verbindungsleitung (12, 38, 38', 52) aufweist.

6. System nach Anspruch 5, **dadurch gekennzeichnet, dass** die Visualisierungseinrichtung (8, 64) dazu eingerichtet ist, die Nutzerausgabe (20, 70) mittels eines virtuellen Modells des Schaltschranks (34) eine visualisierte Nutzerausgabe (20, 70) mit einer Darstellung des Anschlusses, insbesondere der Verdrahtung der identifizierten Verbindungsleitung (12, 38, 38', 52) zu erzeugen.

7. System nach einem der Ansprüche 5 oder 6, umfassend ein Augmented-Reality-Gerät, das zur Ausgabe der Nutzerausgabe (20, 70) an einen Nutzer eingerichtet ist, wobei ein reales Bild oder ein realer Gegenstand mit der erzeugten Nutzerausgabe (20, 70) überlagert wird.

8. System nach einem der Ansprüche 5 bis 7, weiter aufweisend eine Eingabeeinrichtung (22, 50), die dazu eingerichtet ist, Nutzereingaben (24) über das erfolgte Anschließen, insbesondere die erfolgte Verdrahtung, zuvor identifizierter Verbindungsleitungen (88) zu empfangen, wobei die Visualisierungseinrichtung (8, 64) dazu eingerichtet ist, die Nutzerausgabe (20, 70) über das Anschließen, insbesondere über die Verdrahtung einer identifizierten Verbindungsleitung (12, 38, 38', 52) abhängig von Nutzereingaben (24) über das erfolgte Anschließen, insbesondere die erfolgte Verdrahtung anderer, zuvor identifizierter Verbindungsleitungen (88) zu erzeugen.

9. System nach einem der Ansprüche 5 bis 8, weiter aufweisend eine Steuereinrichtung (52,118), die dazu eingerichtet ist, die Durchführung eines Verfahrens nach einem der Ansprüche 1 bis 5 zu bewirken.

10. Verwendung eines Systems (2, 32) nach einem der Ansprüche 5 bis 9 zur automatisierten Unterstützung eines Verdrahtungsvorgangs von in dem Schaltschrank (34) angeordneten Komponenten.

11. Computerprogramm umfassend Befehle, die bewirken, dass die Vorrichtung des Anspruchs 5 die Verfahrensschritte nach einem der Ansprüche 1-4 ausführt.

## Claims

1. A method for the automated support of a connecting process, in particular a wiring process of components arranged in a switch cabinet (34), in which an identifier (10, 40, 40') of a connecting line (12, 38, 38', 52) is detected from a set of pre-assembled connecting lines (12, 38, 38', 52) for connecting, in particular for wiring, components arranged in the switch cabinet (34), the identifier (10, 40, 40') identifying the connecting line (12, 38, 38', 52), in which, depending on the detected identifier (10, 40, 40') and a connection diagram, in particular a wiring diagram (18), a visual user output (20, 70) is automatically generated of the connecting, in particular of the wiring, of the connecting line (12, 38, 38' 52) identified by the identifier (10, 40, 40') and in which the generated user output (20, 70) is output via an output device (8, 66), **characterized in that** the generation of the visual user output (20, 70) comprises the generation of a graphical representation of the connection points and the routing path of the connecting line (12, 38, 38', 52).

2. The method according to claim 1, **characterized in that** the user output (20, 70) is generated by means of a virtual model of the switch cabinet (34) with a representation of the connecting, in particular the wiring, of the identified connecting line (12, 38, 38', 52).

3. The method according to one of claims 1 or 2, **characterised in that** the user output (20, 70) is output via an augmented reality device, in particular a screen (50, 136, 138) or data glasses, wherein a real image or a real object is superimposed with the generated user output (20, 70).

4. The method according to one of claims 1 to 3, in which a user input (24) is received via the connection, in particular via the wiring, of another connecting line (88) identified at an earlier point in time and in which the user output (20, 70) is generated via the connection, in particular via the wiring, of the identified connecting line (12, 38, 38', 52) depending on the user input (24) via the connection, in particular via the wiring, of the other connecting line (88).

5. A system (2, 32) for the automated support of a connecting process, in particular a wiring process, of components arranged in a switch cabinet (34), in particular for carrying out a method according to one of claims 1 to 4, having a detection device (4, 62, 110) which is arranged to detect an identifier (10, 40, 40') of a connecting line (12, 38, 38', 52), the identifier (10, 40, 40') identifying the connecting line (12, 38, 38', 52), the system having a visualization device (8, 64) which is adapted to provide a visual user output (20, 70) via the connection, in particular via the wiring, depending on the identifier (10, 40, 40') detected and a connection diagram, in particular a wiring diagram (18), of the identified connecting line (12, 38, 38', 52) and with an output device (8, 66) which is adapted to output the user output (20, 70) generated by the visualization device to a user, further comprising a set (36) of prefabricated connecting lines (12, 38, 38', 52) for connecting, in particular for wiring, of components arranged in the switch cabinet (34), each connecting line (12, 38, 38', 52) having an identifier (10, 40, 40') for identifying the respective connecting line (12, 38, 38', 52), **characterized in that** the visual user output (20, 70) has a graphical representation of the connection points and the routing path of the connecting line (12, 38, 38', 52).

6. The system according to claim 5, **characterized in that** the visualization device (8, 64) is adapted to generate the user output (20, 70) by means of a virtual model of the switch cabinet (34) as a visualized user output (20, 70) with a representation of the connecting, in particular the wiring of the identified connecting line (12, 38, 38', 52).

7. The system according to one of claims 5 or 6, comprising an augmented reality device which is adapted for outputting the user output (20, 70) to a user, wherein a real image or a real object is superimposed with the generated user output (20, 70).

8. The system according to one of claims 5 to 7, further comprising an input device (22, 50) which is adapted to receive user inputs (24) via the connecting, in particular the wiring, of previously identified connecting lines (88), the visualization device (8, 64) being adapted to generate the user output (20, 70) of the connecting, in particular of the wiring, of an identified connecting line (12, 38, 38', 52) depending on user inputs (24) of the completed connecting, in particular the wiring of other, previously identified connecting lines (88).

9. The system according to one of claims 5 to 8, further comprising a control device (52, 118) which is set up to effect the execution of a method according to one of claims 1 to 5.

10. A use of a system (2, 32) according to one of claims 5 to 9 for automatically supporting a wiring process of components arranged in the switch cabinet (34).

11. A computer program comprising instructions for causing the apparatus of claim 5 to perform the method steps according to one of claims 1-4.

## Revendications

1. Procédé d'assistance automatisée d'un processus de branchement, plus particulièrement d'un processus de câblage de composants disposés dans une armoire de commande (34), dans lequel, au moyen d'un dispositif de détection (4, 62), un identifiant (10, 40, 40') d'une ligne de raccordement (12, 38, 38', 52) est détecté parmi une quantité de lignes de raccordement pré-confectionnées (12, 38, 38', 52), pour le branchement, plus particulièrement pour le câblage, de composants disposés dans l'armoire de commande (34), moyennant quoi l'identifiant (10, 40, 40') identifie la ligne de raccordement (12, 38, 38', 52), dans lequel, en fonction de l'identifiant (10, 40, 40') et d'un plan de branchement, plus particulièrement un plan de câblage (18), une sortie utilisateur visuelle (20, 70) est automatiquement générée concernant le branchement, plus particulièrement le câblage, de la ligne de raccordement (12, 38, 38', 52) identifiée par l'identifiant (10, 40, 40') et dans lequel la sortie utilisateur (20, 70) générée est émise par l'intermédiaire d'un dispositif de sortie (8, 66), **caractérisé en ce que** la production de la sortie utilisateur visuelle (20, 70) comprend la production d'une représentation graphique des points de branchement et du trajet de pose de la ligne de raccordement (12, 38, 38', 52).

2. Procédé selon la revendication 1, **caractérisé en ce que** la sortie utilisateur (20, 70) est générée au moyen d'un modèle virtuel de l'armoire de commande (34) avec une représentation du branchement, plus particulièrement du câblage, de la ligne de raccordement (12, 38, 38', 52) identifiée.

3. Procédé selon l'une des revendications 1 ou 2, **caractérisé en ce que** la sortie utilisateur (20, 70) est émise par l'intermédiaire d'un appareil à réalité augmentée, plus particulièrement d'un écran (50, 136, 138) ou des lunettes de données, moyennant quoi une image réelle ou un objet réel est superposé avec la sortie utilisateur (20, 70) générée.

4. Procédé selon l'une des revendications 1 à 3, dans lequel une entrée utilisateur (24) concernant le branchement effectué, plus particulièrement concernant le câblage effectué, d'une autre ligne de raccordement (88) identifiée à un moment antérieur, est reçue et dans lequel la sortie utilisateur (20, 70) concernant le branchement, plus particulièrement concernant le câblage, de la ligne de raccordement (12, 38, 38', 52) est générée en fonction de l'entrée utilisateur (24) concernant le branchement effectué, plus particulièrement concernant le câblage effectué, de l'autre ligne de raccordement (88).

5. Système (2, 32) pour l'assistance automatisée d'un processus de branchement, plus particulièrement d'un processus de câblage, de composants disposés dans une armoire de commande (34), plus particulièrement pour la réalisation d'un procédé selon l'une des revendications 1 à 4, avec un dispositif de détection (4, 62, 110) qui est conçu pour détecter un identifiant (10, 40, 40') d'une ligne de raccordement (12, 38, 38', 52), moyennant quoi l'identifiant (10, 40, 40') identifie la ligne de raccordement (12, 38, 38', 52) avec un dispositif de visualisation (8, 64), qui est conçu pour générer, en fonction de l'identifiant (10, 40, 40') détecté et d'un plan de branchement, plus particulièrement d'un plan de câblage (18), une sortie utilisateur visuelle (20, 70) concernant le branchement, plus particulièrement concernant le câblage, de la ligne de raccordement (12, 38, 38', 52) identifiée et, avec un dispositif de sortie (8, 66), qui est conçu pour émettre la sortie utilisateur (20, 70) générée par le dispositif de visualisation à l'attention d'un utilisateur, comprenant en outre une quantité (36) de lignes de raccordement (12, 38, 38', 52) pré-confectionnées, pour le branchement, plus particulièrement pour le câblage, de composants disposés dans l'armoire de commande (34), moyennant quoi chaque ligne de raccordement (12, 38, 38', 52) comprend un identifiant (10, 40, 40') pour l'identification de la ligne de raccordement (12, 38, 38', 52) respective, **caractérisé en ce que** la sortie utilisateur visuelle (20, 70) comprend une représentation graphique des points de branchement et du trajet de pose de la ligne de raccordement (12, 38, 38', 52).

6. Système selon la revendication 5, **caractérisé en ce que** le dispositif de visualisation (8, 64) est conçu pour générer la sortie utilisateur (20, 70) au moyen d'un modèle virtuel de l'armoire de commande (34), une sortie utilisateur visuelle (20, 70) avec une représentation du branchement, plus particulièrement du câblage de la ligne de raccordement (12, 38, 38', 52) identifiée.

7. Système selon l'une des revendications 5 ou 6, comprenant un appareil à réalité augmentée qui est conçu pour l'émission de la sortie utilisateur (20, 70) à l'attention d'un utilisateur, moyennant quoi une image réelle ou un objet réel est superposé avec la sortie utilisateur (20, 70) générée.

8. Système selon l'une des revendications 5 à 7, comprenant en outre un dispositif d'entrée (22, 50) qui est conçu pour recevoir des entrées utilisateurs (24) concernant le branchement effectué, plus particulièrement le câblage effectué, de lignes de raccordement (88) identifiées, moyennant quoi le dispositif de visualisation (8, 64) est conçu pour générer la sortie utilisateur (20, 70) concernant le branchement, plus particulièrement concernant le câblage, d'une ligne de raccordement (12, 38, 38', 52) identifiée, en fonction d'entrées utilisateurs (24) concernant le branchement effectué, plus particulièrement le câblage effectué, d'autres lignes de raccordement (88) identifiées auparavant.

9. Système selon l'une des revendications 5 à 8, comprenant en outre un dispositif de commande (52, 118) qui est conçu pour provoquer l'exécution d'un procédé selon l'une des revendications 1 à 5.

10. Utilisation d'un système (2, 32) selon l'une des revendications 5 à 9, pour l'assistance automatisée d'un processus de câblage de composants disposés dans l'armoire de commande (34).

11. Programme informatique comprenant des instructions qui font en sorte que le dispositif de la revendication 5 exécuter les étapes du procédé selon l'une des revendications 1 à 4.
